(19)

Europäisches Patentamt
European Patent Office
Office européen des brevets

(11) **EP 3 699 051 A1**

(12) **EUROPEAN PATENT APPLICATION**
published in accordance with Art. 153(4) EPC

(43) Date of publication:
**26.08.2020 Bulletin 2020/35**

(21) Application number: **18870736.8**

(22) Date of filing: **16.10.2018**

(51) Int Cl.:
*B60W 30/12* *(2020.01)*    *B60W 30/095* *(2012.01)*
*B60W 40/04* *(2006.01)*    *B62D 6/00* *(2006.01)*
*G08G 1/16* *(2006.01)*    *B62D 101/00* *(2006.01)*
*B62D 117/00* *(2006.01)*

(86) International application number:
**PCT/JP2018/038455**

(87) International publication number:
**WO 2019/082734 (02.05.2019 Gazette 2019/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.10.2017 JP 2017204846**

(71) Applicant: **Mazda Motor Corporation**
**Aki-gun, Hiroshima 730-8670 (JP)**

(72) Inventors:
• **GOTO, Takashi**
  **Aki-gun**
  **Hiroshima 730-8670 (JP)**
• **TADA, Kenta**
  **Aki-gun**
  **Hiroshima 730-8670 (JP)**
• **OHMURA, Hiroshi**
  **Aki-gun**
  **Hiroshima 730-8670 (JP)**
• **HOSODA, Kouji**
  **Aki-gun**
  **Hiroshima 730-8670 (JP)**
• **TACHIHATA, Tetsuya**
  **Aki-gun**
  **Hiroshima 730-8670 (JP)**

• **NAKAGAMI, Takashi**
  **Aki-gun**
  **Hiroshima 730-8670 (JP)**
• **NISHIJO, Yuma**
  **Aki-gun**
  **Hiroshima 730-8670 (JP)**
• **KAWAHARA, Yasuhiro**
  **Aki-gun**
  **Hiroshima 730-8670 (JP)**
• **KATAYAMA, Shota**
  **Aki-gun**
  **Hiroshima 730-8670 (JP)**
• **HARADA, Shoji**
  **Aki-gun**
  **Hiroshima 730-8670 (JP)**
• **YAMAMOTO, Yuki**
  **Aki-gun**
  **Hiroshima 730-8670 (JP)**
• **FUKUI, Soichiro**
  **Aki-gun**
  **Hiroshima 730-8670 (JP)**
• **ISOMOTO, Kazunori**
  **Aki-gun**
  **Hiroshima 730-8670 (JP)**
• **SUZUKI, Akira**
  **Aki-gun**
  **Hiroshima 730-8670 (JP)**

(74) Representative: **Müller-Boré & Partner**
**Patentanwälte PartG mbB**
**Friedenheimer Brücke 21**
**80639 München (DE)**

(54) **VEHICLE CONTROL DEVICE**

(57)    Disclosed is a vehicle control device (100) which includes: a surrounding object detection part (10b); a target traveling course calculation part (10c); a corrected traveling course calculation part (10f); and an automatic steering control part (10e) to assist in traveling in the lane, wherein: the corrected traveling course calculation part is configured to set an upper limit line of a permissible relative speed with respect to the surrounding object, and derive the corrected traveling course, based on the upper limit line, an evaluation function, and a limiting condition; and the target traveling course calculation part is configured to, when it is determined by the automatic steering

EP 3 699 051 A1

control part that there is a possibility of a vehicle deviates from the lane, set the target traveling course at a position offset, with respect to a widthwise middle of the lane, on a side on which there is the possibility of the deviation.

# FIG.2

```
        35              21
    ┌─────────┐   ┌─────────┐   ┌─────────┐
    │         │   │ driver  │   │         │
    │ Sensors │   │manipulation│ │ camera  │
    │         │   │  unit   │   │         │
    └────┬────┘   └────┬────┘   └────┬────┘
                                              10
┌───────────────────────────────────────────────────────┐
│ ECU                                                     │
│                                          10a            │
│    ┌──────────────────────────────────┐                │
│    │      input processing part       │                │
│    └──┬──────────┬──────────┬────────┬─┘                │
│       │          │          │        │                  │
│      10b        10c        10d      10e                 │
│  ┌─────────┐┌──────────┐┌─────────┐┌──────────┐         │
│  │surrounding││ target   ││driving  ││automatic │        │
│  │object   ││traveling ││intent   ││steering  │         │
│  │detection││course    ││determina-││control  │         │
│  │part     ││calculation││tion part││part     │         │
│  └────┬────┘│part      │└────┬────┘└────┬─────┘         │
│       │     └────┬─────┘     │          │   10f         │
│  ┌────▼──────────▼───────────▼──────────▼────┐          │
│  │   corrected traveling course derivation part│        │
│  └────────────────────┬─────────────────────┘          │
└───────────────────────┼────────────────────────────────┘
                        │
              ┌─────────▼──────────────┐
              │  ┌──────────────────┐  │
              │  │  engine control  │──31
              │  └──────────────────┘  │
              │  ┌──────────────────┐  │
              │  │  brake control   │──32
              │  └──────────────────┘  │
              │  ┌──────────────────┐  │
              │  │ steering control │──33
              │  └──────────────────┘  │
              └────────────────────────┘
```

**Description**

TECHNICAL FIELD

The present invention relates to a vehicle control device, and more particularly to a vehicle control device for supporting a driver to drive a vehicle.

BACKGROUND ART

In JP 2010-155545A (Patent Document 1), there is described a vehicle control device. This vehicle control device is configured to, during emergency obstacle avoidance, select one of braking-based avoidance control (based on only brake manipulation) and steering-based avoidance control (based on only steering manipulation), according to a vehicle speed at that time, and calculate a target traveling course, using optimization processing. In this vehicle control device, when the braking-based avoidance control is selected, conditions for the calculation will be simplified and limited to only a longitudinal (vehicle forward-rearward directional) motion. On the other hand, when the steering-based avoidance control is selected, the conditions for the calculation will be simplified and limited to only a lateral (vehicle width directional) motion. As above, this technique allows a calculation load to be reduced during an emergency, so that it is possible to shorten a calculation time period while ensuring a high calculation accuracy.

CITATION LIST

[Patent Document]

Patent Document 1: JP 2010-155545A

SUMMARY OF INVENTION

[Technical Problem]

However, in the invention described in the Patent Document 1, obstacle avoidance is performed by one of the brake-based avoidance control and the steering-based avoidance control. Therefore, there can arise a situation where vehicle control by the vehicle control device does not match a driving manipulation which is currently being performed by a driver, and this situation involves a problem of giving the driver a strong feeling of strangeness.
The present invention has been made to solve the above problem, and an object thereof is to provide a vehicle control device capable of, when executing driving support in any of various modes, making it less likely to give a driver a feeling of strangeness.

[Solution to Technical Problem]

In order to solve the above technical problem, the present invention provides a vehicle control device for supporting driving of a vehicle. The vehicle control device comprises: a surrounding object detection part to detect a surrounding object and a lane in which an own vehicle is traveling; a target traveling course calculation part to calculate a target traveling course of the own vehicle; a corrected traveling course calculation part to correct the target traveling course calculated by the target traveling course calculation part, to derive a corrected traveling course; and an automatic steering control part to, when determining that there is a possibility that the own vehicle deviates from the lane, assist steering of the own vehicle such that the own vehicle travels in the lane, wherein: the corrected traveling course calculation part is configured to, when a surrounding object to be avoided is detected by the surrounding object detection part, set an upper limit line of a permissible relative speed at which the own vehicle is permitted to travel with respect to the surrounding object, and derive the corrected traveling course, based on the upper limit line, a given evaluation function, and a given limiting condition; and the target traveling course calculation part is configured to, when it is determined by the automatic steering control part that there is the possibility that the own vehicle deviates from the lane, set the target traveling course at a position offset, with respect to a widthwise middle of the lane, on a side on which there is the possibility of the deviation.
In the vehicle control device of the present invention having the above feature, when a surrounding object to be avoided is detected by the surrounding object detection part, the corrected traveling course calculation part operates to set an upper limit line of a permissible relative speed at which the own vehicle is permitted to travel with respect to the surrounding object. The corrected traveling course calculation part also operates to derive the corrected traveling course, based on the upper limit line, a given evaluation function, and a given limiting condition. As above, the corrected traveling course calculation part is provided with the given limiting condition, so that it is possible to derive one appropriate corrected traveling course from among a plurality of corrected traveling course candidates settable as a corrected traveling course, in a relatively small amount of calculation. Further, when it is determined by the automatic steering control part that there is the possibility that the own vehicle deviates from the lane, the target traveling course calculation part operates to set the target traveling course at a position offset, with respect to a widthwise middle of the lane, on a side on which there is the possibility of the deviation (deviation side). Thus, when there is the possibility that the own vehicle deviates from the lane, the target traveling course is set at a position offset on the deviation side, so that, even in a situation where the own vehicle deviates from the lane, it is possible to return the own vehicle to the target traveling course which is set at a relatively close position on the deviation side, without giving a driver a feeling of strangeness.

Preferably, in the vehicle control device of the present invention, the target traveling course calculation part is configured to, when it is determined by the automatic steering control part that there is no possibility that the own vehicle deviates from the lane, set the target traveling course at the widthwise middle of the lane.

According to this feature, when there is no possibility of deviation from the lane, the target traveling course is set at the widthwise middle of the lane, so that it is possible to give a feeling of safety to a driver of the vehicle being traveling in the lane.

Preferably, in the vehicle control device of the present invention, the corrected traveling course calculation part is configured to set, as the limiting condition, a region outside the lane in which the own vehicle is traveling, irrespective of whether or not there is the possibility that the own vehicle deviates from the lane.

According to this feature, irrespective of whether or not there is the possibility of deviation from the lane, a region outside the lane in which the own vehicle is traveling is set as the limiting condition. Thus, except in the event of emergency collision avoidance or the like, the corrected traveling course is set in the lane in which the own vehicle is traveling, so that it is possible to avoid unnecessary deviation from the lane.

Preferably, in the vehicle control device of the present invention, the automatic steering control part is configured to, when executing steering-based avoidance control with respect to an oncoming vehicle, determine that there is the possibility that the own vehicle deviates from the lane.

According to this feature, when the steering-based avoidance control with respect to an oncoming vehicle is executed, it is determined that there is the possibility of deviation from the lane. Thus, even when the own vehicle deviates from the lane so as to avoid the oncoming vehicle, it is possible to return the own vehicle to the inside of the lane without a feeling of strangeness.

Preferably, in the vehicle control device of the present invention, the automatic steering control part is configured to, when executing steering-based avoidance control with respect to a rearward or laterally outward side, determine that there is the possibility that the own vehicle deviates from the lane.

According to this feature, when the steering-based avoidance control with respect to a rearward or laterally outward side is executed, it is determined that there is the possibility of deviation from the lane. Thus, even when the own vehicle deviates from the lane due to the steering-based avoidance control with respect to the rearward or laterally outward side, it is possible to return the own vehicle to the inside of the lane without a feeling of strangeness.

Preferably, in the vehicle control device of the present invention, the automatic steering control part is configured to, when executing lane-or road-deviation avoidance control, determine that there is the possibility that the own vehicle deviates from the lane.

According to this feature, when the lane-or road-deviation avoidance control is executed, it is determined that there is the possibility of deviation from the lane. Thus, even when the own vehicle is returned to the inside of the lane after the execution of the lane-or road-deviation avoidance control, a driver is never given a feeling of strangeness.

[Effect of Invention]

When executing driving support in any of various modes, the vehicle control device of the present invention can make it less likely to give a driver a feeling of strangeness.

BRIEF DESCRIPTION OF DRAWINGS

FIG. 1A is a configuration diagram of a vehicle control device according to one embodiment of the present invention.
FIG. 1B is a diagram showing details of a driver manipulation unit in the vehicle control device according to this embodiment.
FIG. 2 is a control block diagram of the vehicle control device according to this embodiment.
FIG. 3 is an explanatory diagram of a first traveling course to be calculated by the vehicle control device according to this embodiment.

FIG. 4 is an explanatory diagram of a second traveling course to be calculated by the vehicle control device according to this embodiment.

FIG. 5 is an explanatory diagram of a third traveling course to be calculated by the vehicle control device according to this embodiment.

FIG. 6 is an explanatory diagram of obstacle avoidance by correction of a target traveling course in the vehicle control device according to this embodiment.

FIG. 7 is an explanatory diagram showing a relationship between a permissible upper limit of a pass-by speed and a clearance between an obstacle and an own vehicle during avoidance of the obstacle, in the vehicle control device according to this embodiment.

FIG. 8 is an explanatory diagram of traveling course correction processing in the vehicle control device according to this embodiment.

FIG. 9 is an explanatory diagram of a vehicle model in the vehicle control device according to this embodiment.

FIG. 10 is a processing flow of driving support control in the vehicle control device according to this embodiment.

FIG. 11 is a flowchart for setting a limiting condition and the like to be used by a corrected traveling course calculation part of the vehicle control device according to this embodiment.

FIG. 12 is a diagram showing one example of a limiting condition on traveling course to be satisfied by corrected traveling course candidates, in the vehicle control device according to this embodiment.

FIG. 13 is a diagram showing another example of the limiting condition on traveling course to be satisfied by corrected traveling course candidates, in the vehicle control device according to this embodiment.

FIG. 14 is a diagram showing yet another example of the limiting condition on traveling course to be satisfied by corrected traveling course candidates, in the vehicle control device according to this embodiment.

FIG. 15 is a diagram showing still another example of the limiting condition on traveling course to be satisfied by corrected traveling course candidates, in the vehicle control device according to this embodiment.

FIG. 16 is a diagram showing yet still another example of the limiting condition on traveling course to be satisfied by corrected traveling course candidates, in the vehicle control device according to this embodiment.

FIG. 17 is a table showing a limiting condition on traveling parameter to be satisfied by corrected traveling course candidates, in the vehicle control device according to this embodiment.

FIG. 18 is a diagram showing one example of an optimal corrected traveling course satisfying the limiting condition, derived by the corrected traveling course calculation part of the vehicle control device according to this embodiment.

## DESCRIPTION OF EMBODIMENTS

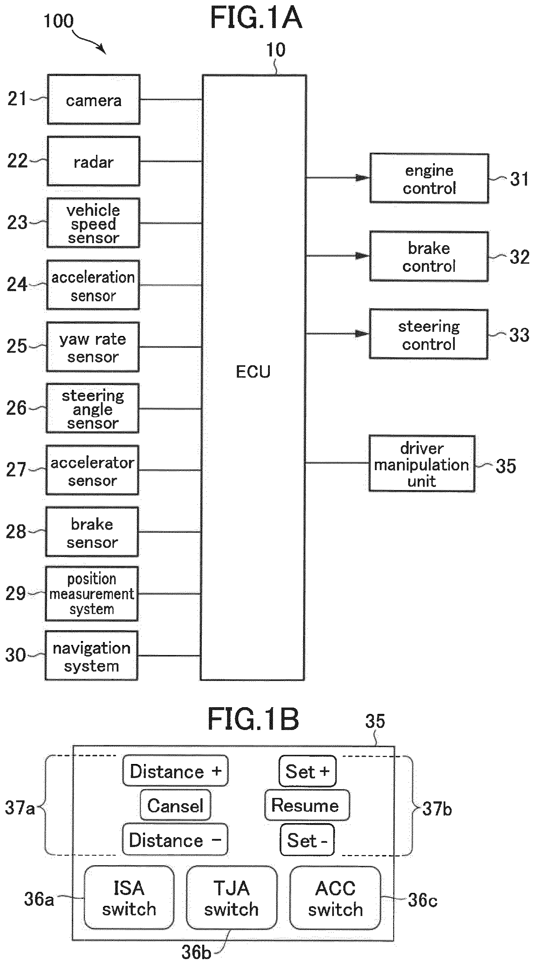

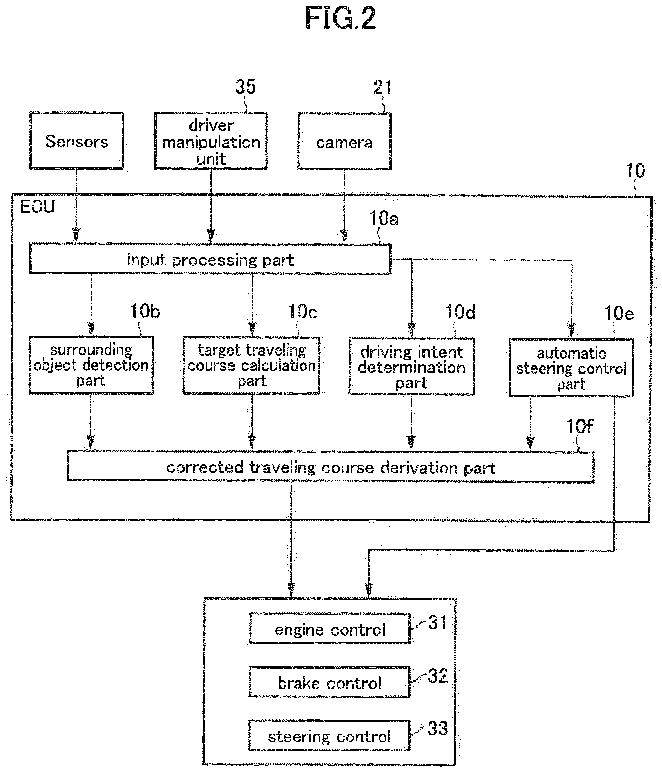

With reference to the accompanying drawings, a vehicle control device according to one embodiment of the present invention will now be described. First of all, the configuration of the vehicle control device according to this embodiment will be described with reference to FIGS. 1A, 1B and 2. FIG. 1A is a configuration diagram of the vehicle control device, and FIG. 1B is a diagram showing details of a driver manipulation unit. FIG. 2 is a control block diagram of the vehicle control device.

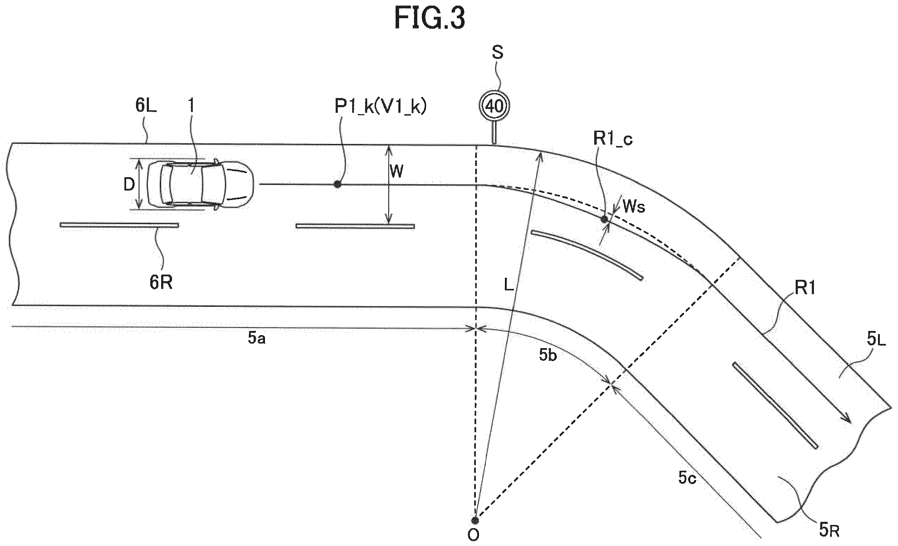

The vehicle control device 100 according to this embodiment is configured to provide various driving support controls to a vehicle 1 (see FIG. 3, etc.) equipped with the device, according to respective ones of a plurality of driving support modes. From among the plurality of driving support modes, a driver can select one desired driving support mode.

As shown in FIG. 1A, the vehicle control device 100 is equipped in the vehicle (own vehicle) 1, and comprises a vehicle control and computing unit (ECU) 10, a plurality of sensors and switches, a plurality of control systems, and a driver manipulation unit 35 for allowing user input regarding the driving support modes. The sensors and switches include: a vehicle-mounted camera 21; a millimeter-wave radar 22; a plurality of behavior sensors (a vehicle speed sensor 23, an acceleration sensor 24, and a yaw rate sensor 25) each for detecting the behavior of the vehicle; a plurality of behavior switches (a steering angle sensor 26, an accelerator sensor 27, and a brake sensor 28) each for detecting the behavior of the driver; a position measurement system 29; and a navigation system 30. Further, the control systems include an engine control system 31, a brake control system 32 and a steering control system 33.

As shown in FIG. 1B, the driver manipulation unit 35 is provided in a vehicle interior (passenger compartment) of the vehicle 1 such that it can be manipulated by the driver, and functions as a mode setting manipulation unit for selecting one desired driving support mode from among the plurality of driving support modes. The driver manipulation unit 35 is provided with an ISA switch 36a for setting a speed limiting mode, a TJA switch 36b for setting a preceding vehicle following mode, and an ACC switch 36c for setting an automatic speed control mode. The driver manipulation unit 35 is further provided with a distance setting switch 37a for setting an inter-vehicle distance in the preceding vehicle following mode, and a vehicle speed setting switch 37b for setting a vehicle speed in the automatic speed control mode, etc.

The ECU 10 illustrated in FIG. 1A is composed of a computer comprising a CPU, a memory storing therein various programs, and an input-output device. The ECU 10 is configured to be operable, based on a driving support mode selection signal and a setting vehicle speed signal received from the driver manipulation unit 35, and signals received from the sensors and switches, to output request signals for appropriately operating an engine system, a brake system and a steering system, respectively, to the engine control system 31, the brake control system 32 and the steering control system 33.

The vehicle-mounted camera 21 is configured to image surroundings of the vehicle 1 and output imaged image data. The ECU 10 is operable to identify an object (e.g., a vehicle, a pedestrian, a road, a demarcation line (a lane border line, a white road line or a yellow road line), a traffic light, a traffic sign, a stop line, an intersection, an obstacle or the like) based on the image data. In this embodiment, the vehicle-mounted camera 21 also includes a vehicle interior camera for imaging the driver during driving of the vehicle 1. Here, the ECU 10 may be configured to acquire information regarding such an object, from outside through an in-vehicle communication device, by means of transportation infrastructure, inter-vehicle communication, etc.

The millimeter-wave radar 22 is a measurement device for measuring the position and speed of the object (particularly, a preceding vehicle, a parked vehicle, a pedestrian, an obstacle or the like), and is configured to transmit a radio wave (transmitted wave) forwardly with respect to the vehicle 1 and receive a reflected wave produced as a result of reflection of the transmitted wave by the object. The millimeter-wave radar 22 is further configured to measure, based on the transmitted wave and the received wave, a distance between the vehicle 1 and the object, i.e., a vehicle-object distance, (e.g., inter-vehicle distance) and/or a relative speed of the object with respect to the vehicle 1. In this embodiment, instead of the millimeter-wave radar 22, a laser radar, an ultrasonic sensor or the like may be used to measure the vehicle-object distance and/or the relative speed. Further, the position and speed measurement device may be composed using a plurality of other sensors.

The vehicle speed sensor 23 is configured to detect an absolute speed of the vehicle 1.

The accelerator sensor 24 is configured to detect an acceleration (a longitudinal (forward-rearward directional) acceleration, and a lateral (width directional) acceleration) of the vehicle 1. Here, the acceleration includes a speed-increasing side (positive acceleration) and a speed-reducing side (negative acceleration).

The yaw rate sensor 25 is configured to detect a yaw rate of the vehicle 1.

The steering angle sensor 26 is configured to detect a turning angle (steering angle) of a steering wheel of the vehicle 1.

The accelerator sensor 27 is configured to detect a depression amount of an accelerator pedal of the vehicle 1.

The brake sensor 28 is configured to detect a depression amount of a brake pedal of the vehicle 1.

The position measurement system 29 is composed of a GPS system and/or a gyro system, and is configured to detect the position of the vehicle 1 (current vehicle position information).

The navigation system 30 stores therein map information, and is configured to be operable to provide the map information to the ECU 10. Then, the ECU 10 is operable, based on the map information and the current vehicle position information, to identify a road, an intersection, a traffic light, a building and others existing around the vehicle 1 (particularly, ahead of the vehicle 1 in its travelling direction). It is to be understood that the map information may be stored in the ECU 10.

The engine control system 31 comprises a controller for controlling an engine of the vehicle 1. The ECU 10 is operable, when there is a need to accelerate or decelerate the vehicle 1, to output, to the engine control system 31, an engine output change request signal for requesting to change an engine output.

The brake control system 32 comprises a controller for controlling a braking device of the vehicle 1. The ECU 10 is operable, when there is a need to decelerate the vehicle 1, to output, to the brake control system 32, a braking request signal for requesting to generate a braking force to be applied to the vehicle 1.

The steering control system 33 comprises a controller for controlling a steering device of the vehicle 1. The ECU 10 is operable, when there is a need to change the travelling direction of the vehicle 1, to output, to the steering control system 33, a steering direction change request signal for requesting to change a steering direction.

As shown in FIG. 2, the ECU 10 comprises a single CPU functioning as an input processing part 10a, a surrounding object detection part 10b, a target traveling course calculation part 10c, a driving intent determination part 10d, an automatic steering control part 10e, and a corrected traveling course calculation part 10f. In this embodiment, the ECU 10 is configured such that the above functioned are executed by the single CPU. Alternatively, the ECU may be configured such that the above functioned are executed by a plurality of CPUs.

The input processing part 10a is configured to process input information from the sensors, the driver manipulation unit 35 and the camera 21. Specifically, the input processing part 10a functions as an image analysis part for analyzing an image of a traveling road captured by the camera 21 to detect a traveling lane in which the own vehicle 1 is traveling (demarcation lines on opposed lateral sides of the lane).

The surrounding object detection part 10b is configured to detect a surrounding object, based on input information from the millimeter-wave radar 22, the camera 21 and others.

The target traveling course calculation part 10c is configured to calculate a target traveling course of the vehicle 1, based on input information from the millimeter-wave radar 22, a vehicle exterior camera comprised in the vehicle-mounted camera 21, the sensors and the like.

The driving intent determination part 10d is configured to, based on an image captured by the vehicle interior camera comprised in the vehicle-mounted camera 21, determine whether or not there is an intent of the driver to drive the vehicle 1. Specifically, the driving intent determination part 10d is configured to subject an image of the driver captured by the vehicle interior camera to image analysis, and, based on a result of the image analysis, determine whether or not the driver is sleeping or inattentive. When the driver is determined not to be sleeping or inattentive, it can be determined that the steering or accelerator manipulation by the driver is based on the driver's intent (there is the driver's intent to drive the vehicle 1).

The automatic steering control part 10e is configured to determine, based on detection signals of the vehicle-mounted camera 21, the millimeter-wave radar 22 and others, whether or not there is a possibility that the own vehicle 1 deviates (departs) from the lane, and, when determining that there is the possibility of the deviation (departure), assist steering of the own vehicle such that the own vehicle travels in the lane. Specifically, the automatic steering control part 10e is configured to, when steering-based avoidance control with respect to an oncoming vehicle (OCP: On Coming Prevention), steering-based avoidance control with respect to an object approaching from behind (BSP: Blind Spot Prevention), or steering-based avoidance control with respect to deviation from the lane or road (LDP/ RDP: Lane/Road Departure Prevention) is activated, send the steering direction change request signal to the control system (steering control system 33) to assist steering of the own vehicle such that the own vehicle travels in the lane.

The corrected traveling course calculation part 10f is configured to correct the target traveling course calculated by the target traveling course calculation part 10c, to derive a corrected traveling course. As one example, the corrected traveling course calculation part 10f is configured to, when a surrounding object to be avoided is detected by the surrounding object detection part 10b, set an upper limit line of a permissible relative speed at which the own vehicle is permitted to travel with respect to the surrounding object, and correct the target traveling course calculated by the target traveling course calculation part 10c, in such a manner as to satisfy the upper limit line.

The corrected traveling course calculation part 10f is further configured to, from among a plurality of traveling courses satisfying the upper limit line of the permissible relative speed at which the own vehicle is permitted to travel with respect to the surrounding object, select one or more traveling courses satisfying a given limiting condition, and, from among the selected one or more traveling courses, determine one traveling course which is the smallest in terms of a given evaluation function, as an optimal corrected traveling course. That is, the corrected traveling course calculation part 10f is configured to derive a corrected traveling course based on the upper limit line, the given evaluation function and the given limiting condition. In this embodiment, the limiting condition for determining an optimal corrected traveling course is appropriately set, based on a selected one of the driving support modes, and a state of driving by the driver.

The ECU 10 is operable to generate and output one or more request signals with respect to one or more of at least the engine control system 31, the brake control system 32 and the steering control system 33, so as to allow the vehicle 1 to travel along the optimal corrected traveling course determined by the corrected traveling course calculation part 10f.

Next, the driving support modes to be executed by the vehicle control device 100 according to this embodiment will be described. In this embodiment, the driving support modes consist of four modes. Specifically, the driving support modes consist of: the speed limiting mode which is to be executed in response to manipulation of the ISA switch 36a and is a manual steering mode; the preceding vehicle following mode which is to be executed in response to manipulation of the TJA switch 36b and is an automatic steering mode; the automatic speed control mode which is to be executed in response to manipulation of the ACC switch 36c and is a manual steering mode; and a basic control mode which is to be executed when none of the above three driving support modes is selected.

< Preceding Vehicle Following Mode >

The preceding vehicle following mode is an automatic steering mode in which the vehicle 1 is controlled to travel following a preceding vehicle, while maintaining a given inter-vehicle distance between the vehicle 1 and the preceding vehicle, and involves automatic steering control, automatic speed control (engine control and/or brake control), automatic obstacle avoidance control (the speed control and the steering control) to be executed by the vehicle control device 100.

In the preceding vehicle following mode, each of the steering control and the speed control is performed in different manners depending on detectability of opposed lane edges, and the presence or absence of a preceding vehicle. Here, the term "opposed lane edges" means opposed edges (one of which is a demarcation line such as a white road line, a road edge, an edge stone, a median strip, a guardrail or the like) of a lane in which the vehicle 1 is traveling, i.e., a borderline with respect to a neighboring lane, sidewalk or the like. The ECU 10 is operable, when serving as a traveling road edge detection part, to detect the opposed lane edges from the image data captured by the vehicle exterior camera comprised in the vehicle-mounted camera 21. Alternatively, the ECU 10 may be configured to detect the opposed lane edges from the map information of the navigation system 30. However, for example, in a situation where the vehicle 1 is traveling on the plain on which there is no traffic lane, instead of on a well-maintained road, or in a situation where reading of the image data from the vehicle-mounted camera 21 is bad, there is a possibility of failing to detect the opposed lane edges.

As above, in this embodiment, the ECU 10 is configured to serve as the traveling road edge detection part. Alternatively, the vehicle-mounted camera 21 may be configured to detect the opposed lane edges to serve as the traveling road edge detection part, or may be configured to cooperate with the ECU 10 such that they serve as the traveling road edge detection part to detect the opposed lane edges.

Further, in this embodiment, the ECU 10 is operable, when serving as a preceding vehicle detection part, to detect a preceding vehicle, based on the image data from the vehicle-mounted camera 21, and the measurement data from the millimeter-wave radar 22. Specifically, the ECU 10 is operable to detect, as a preceding vehicle, a second vehicle which is traveling ahead of the vehicle 1, based on the image data from the vehicle-mounted camera 21. Further, in this embodiment, the ECU 10 is operable, when the inter-vehicle distance between the vehicle 1 and the second vehicle is determined to be equal to or less than a given value (e.g., 400 to 500 m), based on the measurement data from the millimeter-wave radar 22, to detect the second vehicle as a preceding vehicle.

As above, in this embodiment, the ECU 10 is configured to serve as the preceding vehicle detection part. Alternatively, the vehicle-mounted camera 21 may be configured to detect a second vehicle which is traveling ahead of the vehicle 1, to serve as the preceding vehicle detection part, or the preceding vehicle detection part may be composed of not only the ECU 10 but also the vehicle-mounted camera 21 and the millimeter-wave radar 22.

In a situation where, in the preceding vehicle following mode, a surrounding object to be avoided is detected by the surrounding object detection part 10b, the target traveling course is corrected to automatically avoid the obstacle (surrounding object), irrespective of the presence or absence of a preceding vehicle, and the detectability of opposed lane edges.

< Automatic Speed Control Mode >

The automatic speed control mode is a manual steering mode in which the speed control is performed such that the vehicle 1 maintains a given setup vehicle speed (constant speed) preliminarily set by the driver using the vehicle speed setting switch 37b, and which involves the automatic speed control (the engine control and/or the brake control) to be executed by the vehicle control device 100, but does not involves the automatic steering control. In this automatic speed control mode, although the vehicle 1 is controlled to travel while maintaining the setup vehicle speed, the driver can increase the vehicle speed beyond the setup vehicle speed by depressing the accelerator pedal. Further, when the driver performs brake manipulation, priority is given to the intent of the driver, and therefore the vehicle 1 is decelerated from the setup vehicle speed. Further, when the vehicle 1 catches up to a preceding vehicle, the speed control is performed such that the vehicle 1 follows the preceding vehicle while maintaining an inter-vehicle distance appropriate to a follow-up vehicle speed, and then when the preceding vehicle disappears, the speed control is performed such that the follow-up vehicle speed is returned to the setup vehicle speed.

< Speed Limiting Mode >

The speed limiting mode is a manual steering mode in which the speed control is performed to prevent the vehicle speed of the vehicle 1 from exceeding a speed limit (legal speed limit) designated by a speed sign, or the setup vehicle speed set by the driver, and which involves the automatic speed control (engine control) to be executed by the vehicle control device 100. With regard to the speed limit, the ECU 10 may be configured to subject image data about an image of a speed sign or a speed marking on a road surface imaged by the vehicle-mounted camera 21, to image recognition processing, to identify the legal speed limit, or may be configured to receive information regarding the speed limit from outside via a wireless communication. In the speed limiting mode, even when the driver depresses the accelerator pedal so as to increase the vehicle speed beyond the speed limit or the setup vehicle speed, the vehicle speed of the vehicle 1 is increased only up to the speed limit or the setup vehicle speed.

< Basic Control Mode >

The basic control mode is a mode (off mode) in which none of the above three driving support modes is selected through the driver manipulation unit 35, and the automatic steering control and speed control are not executed by the vehicle control device 100. However, the vehicle control device 100 is configured to execute, in the basic control mode, the steering-based avoidance control with respect to an oncoming vehicle (OCP: On Coming Prevention), the steering-based avoidance control with respect to an object approaching from behind (BSP: Blind Spot Prevention), and the steering-based avoidance control with respect to deviation from the lane or road (LDP/RDP: Lane/Road Departure Prevention). For example, when the vehicle 1 encounters a situation where it is likely to collide with an oncoming vehicle or the like, the above control is executed to avoid the collision. It should be noted here that such collision avoidance is also executed in the preceding vehicle following mode, the automatic speed control mode and the speed limiting mode.

Further, the vehicle control device 100 may be configured such that the BSP and LDP/RDP are not executed in the basic control mode.

Next, with reference to FIGS. 3 to 5, a plural of traveling courses to be calculated by the vehicle control device 100 according to this embodiment will be described. FIGS. 3 to 5 are explanatory diagrams of first to third traveling courses, respectively. In this embodiment, the target traveling course calculation part 10c comprised in the ECU 10 is configured to calculate the first to third traveling courses R1 to R3 temporally repeatedly (e.g., at intervals of 0.1 sec). In this embodiment, the ECU 10 is operable, based on information from the sensors and others, to calculate a traveling course in a period from a present time through until a given time period (e.g., 3 sec) elapses. The traveling course Rx (where x = 1, 2, 3) is defined by a target position (Px_k) and a target speed (Vx_k) (where k = 0, 1, 2, - - -, n) of the vehicle 1 on the traveling course. Further, at each of the target positions, target values of a plurality of variables (acceleration, acceleration change rate, yaw rate, steering angle, vehicle angle, etc.) are specified in addition to the target speed.

Each of the traveling courses (first to third traveling courses) in FIGS. 3 to 5 is calculated based on the shape of a traveling road on which the vehicle 1 is traveling, a traveling trajectory of a preceding vehicle, the traveling behavior of the vehicle 1, and the setup vehicle speed, without taking into account surrounding object detection information regarding an object (an obstacle such as a parked vehicle or a pedestrian) on the traveling road or around the traveling road. Thus, in this embodiment, each of the traveling courses is calculated without taking into account the surrounding object detection information, so that it is possible to keep down the overall calculation load for calculating these traveling courses.

For the sake of facilitating understanding, the following description will be made based on an example in which each of the traveling courses is calculated on the assumption that the vehicle 1 travels on a road 5 consisting of a straight section 5a, a curve section 5b, a straight section 5c. The road 5 comprises left and right lanes 5L, 5R. Assume that, at a present time, the vehicle 1 travels on the lane 5L in the straight section 5a.

(First Traveling Course)

As shown in FIG. 3, the first traveling course R1 is set, by a distance corresponding to a given time period, to allow the vehicle 1 to maintain traveling in the lane 5L serving as the traveling road, in conformity to the shape of the road 5. Specifically, the first traveling course R1 is set, in each of the straight sections 5a, 5c, to allow the vehicle 1 to maintain traveling along approximately the widthwise middle of the lane 5L, and set, in the curve section 5b, to allow the vehicle 1 to travel on an inner side or in-side (on the side of a center O of a curvature radius L of the curve section 5b) with respect to the widthwise middle of the lane 5L.

The target traveling course calculation part 10c is operable to execute the image recognition processing for image data about surroundings of the vehicle 1, imaged by the vehicle-mounted camera 21, to detect opposed lane edges 6L, 6R. The opposed lane edges are, e.g., a demarcation line (white road line or the like), and a road shoulder, as mentioned above. Further, the target traveling course calculation part 10c is operable, based on the detected opposed lane edges 6L, 6R, to calculate a lane width W of the lane 5L and the curvature radius L in the curve section 5b. Alternatively, the target traveling course calculation part 10c may be configured to acquire the lane width W and the curvature radius L from the map information of the navigation system 30. Further, the target traveling course calculation part 10c is operable to read, from the image data, a speed limit indicated by a speed sign S or on the road surface. Alternatively, the target traveling course calculation part 10c may be configured to acquire the speed limit from outside via a wireless communication, as mentioned above.

With regard to the straight sections 5a, 5c, the target traveling course calculation part 10c is operable to set a plurality of target positions P1_k of the first traveling course R1 to allow a vehicle width directional center (e.g., the position of the center of gravity) of the vehicle 1 to pass through the widthwise middle between the opposed lane edges 6L, 6R.

On the other hand, with regard to the curve section 5b, the target traveling course calculation part 10c is operable to maximally set a displacement amount Ws toward the in-side from the widthwise middle position of the lane 5L at a longitudinal middle position P1_c of the curve section 5b. This displacement amount Ws is calculated based on the curvature radius L, the lane width W, and a width dimension D of the vehicle 1 (prescribed values stored in the memory of the ECU 10). Then, the target traveling course calculation part 10c is operable to set the plurality of target positions P1_k of the first traveling course R1 in such a manner as to smoothly connect the longitudinal middle position P1_c of the curve section 5b to the widthwise middle position of each of the straight sections 5a, 5b. Here, it should be understood that the first traveling course R1 may also be offset toward the in-side in the straight sections 5a, 5c at positions just before entering the curve section 5b and just after exiting the curve section 5b.

Basically, a target speed V1_k at each of the target positions P1_k of the first traveling course R1 is set to a given setup vehicle speed (constant speed) preliminarily set by the driver using the vehicle speed setting switch 37b of the driver manipulation unit 35 or by the system 100. However, when this setup vehicle speed exceeds a speed limit acquired from a speed sign S or the like, or a speed limit determined according to the curvature radius L of the curve section 5b, the target speed V1_k at each of the target positions P1_k on the traveling course is limited to a lower one of the two speed limits. Further, the target traveling course calculation part 10c is operable to correct the target positions P1_k and the target speed V1_k, according to a current behavior state (i.e., vehicle speed, acceleration, yaw rate, steering angle, lateral acceleration, etc.) of the vehicle 1. For example, when a current value of the vehicle speed is largely different from the setup vehicle speed, the target speed is corrected so as to allow the vehicle speed to come close to the setup vehicle speed.

(Second Traveling Course)

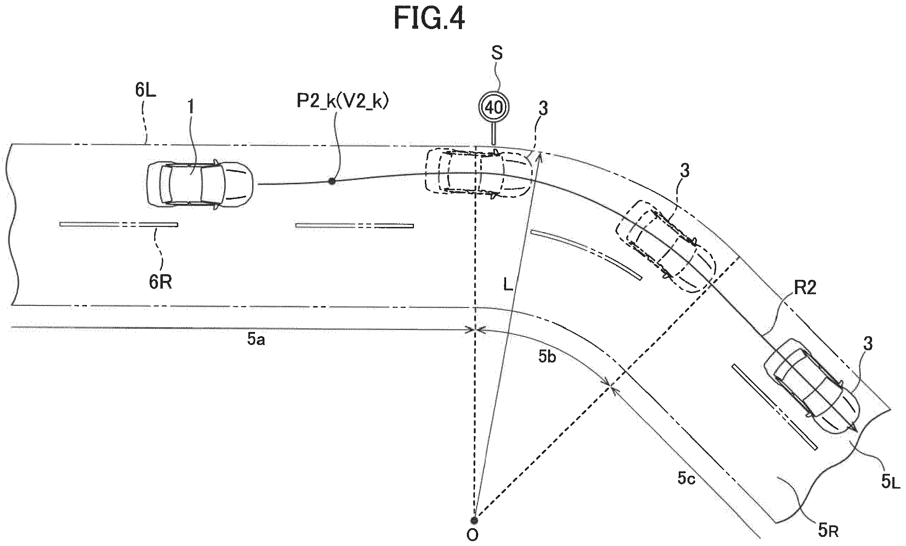

As shown in FIG. 4, the second traveling course R2 is set, by a distance corresponding to a given time period, to allow the vehicle 1 to follow a traveling trajectory of a preceding vehicle 3. The target traveling course calculation part 10c is operable to continuously calculate the position and speed of the preceding vehicle 3 on the lane 5L on which the vehicle 1 is traveling, based on the image data from the vehicle-mounted camera 21, the measurement data from the millimeter-wave radar 22, and the vehicle speed of the vehicle 1 from the vehicle speed sensor 23, and store the calculated position and speed as preceding vehicle trajectory information, and, based on the preceding vehicle trajectory information, to set the traveling trajectory of the preceding vehicle 3 as the second traveling course R2 (target positions P2_k and target speeds V2_k).

(Third Traveling Course)

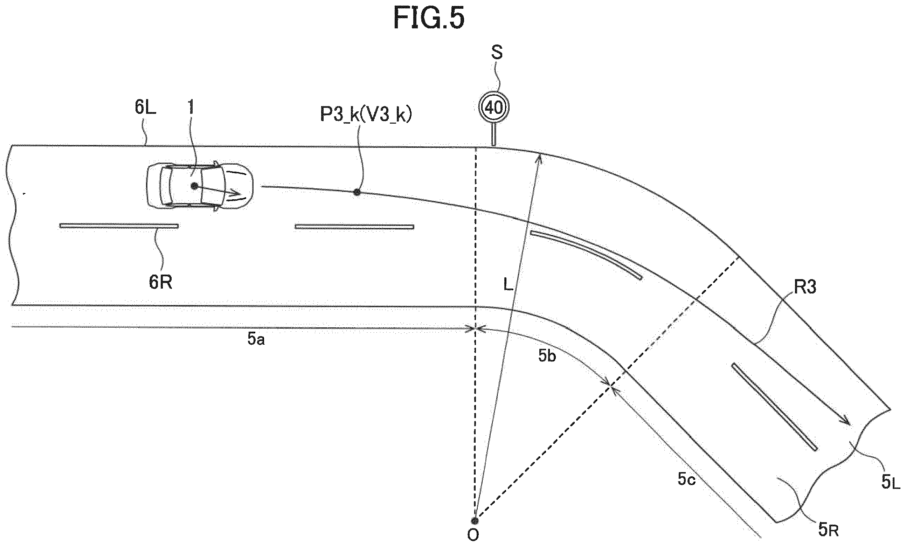

As shown in FIG. 5, the third traveling course R3 is set, by a distance corresponding to a given time period, based on a current driving state of the vehicle 1 by the driver. Specifically, the third traveling course R3 is set based on a position and a speed estimated from a current traveling behavior of the vehicle 1.

The target traveling course calculation part 10c is operable, based on the steering angle, the yaw rate and the lateral acceleration of the vehicle 1, to calculate target positions P3_k of the third traveling course R3 having the distance corresponding to the given time period. However, in the situation where the opposed lane edges are detected, the target traveling course calculation part 10c is operable to correct the target positions P3_k so as to prevent the calculated third traveling course R3 from coming close to or intersecting with any of the lane edges.

Further, the target traveling course calculation part 10c is operable, based on current values of the vehicle speed and the acceleration of the vehicle 1, to calculate a target speed V3_k of the third traveling course R3 having the distance corresponding to the given time period. Here, when the target speed V3_k exceeds the speed limit acquired from the speed sign S or the like, the target speed V3_k may be corrected so as not to exceed the speed limit.

Next, a relationship between the driving support modes and the target traveling courses in the vehicle control device 100 will be described. In this embodiment, the vehicle control device 100 is configured such that, when the driver manipulates the driver manipulation unit 35 to select one of the driving support modes, one of the traveling courses is selected, as a target traveling course, according to the selected driving support mode.

When the preceding vehicle following mode is selected in a situation where opposed lane edges are detected, the first traveling course is used as a target traveling course, irrespective of the presence or absence of a preceding vehicle. In this case, the setup vehicle speed set using the vehicle speed setting switch 37b is used as the target speed.

On the other hand, in a situation where the preceding vehicle following mode is selected in a situation where no opposed lane edges are detected, but a preceding vehicle is detected, the second traveling course is used as a target traveling course. In this case, the target speed is set according to the vehicle speed of the preceding vehicle. Further, when the preceding vehicle following mode is selected in a situation where neither opposed lane edges nor a preceding vehicle is detected, the third traveling course is applied.

When the automatic speed control mode is selected, the third traveling course is used as a target traveling course. In the automatic speed control mode in which the speed control is automatically executed as mentioned above, the setup speed set through the use of the setting vehicle speed input part 37 is used as the target speed. Further, the driver manually controls steering by manipulating the steering wheel.

When the speed limiting mode is selected, the third traveling course is also used as a target traveling course. In the speed limiting mode in which the speed control is automatically executed as mentioned above, the target speed is set according to the depression amount of the accelerator pedal by the driver, within the speed limit. Further, the driver manually controls steering by manipulating the steering wheel.

When the basic control mode (off mode) is selected, the third traveling course is used as a target traveling course. The basic control mode is basically the same as the speed limiting mode in a state in which no speed limit is set.

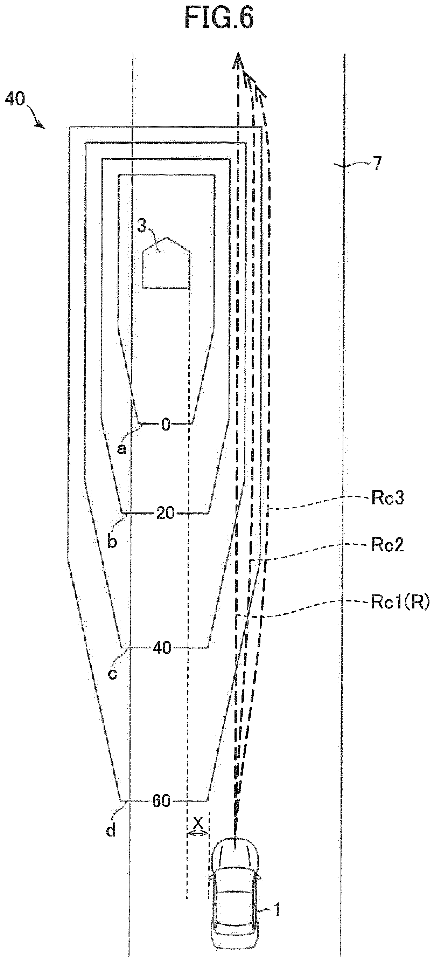

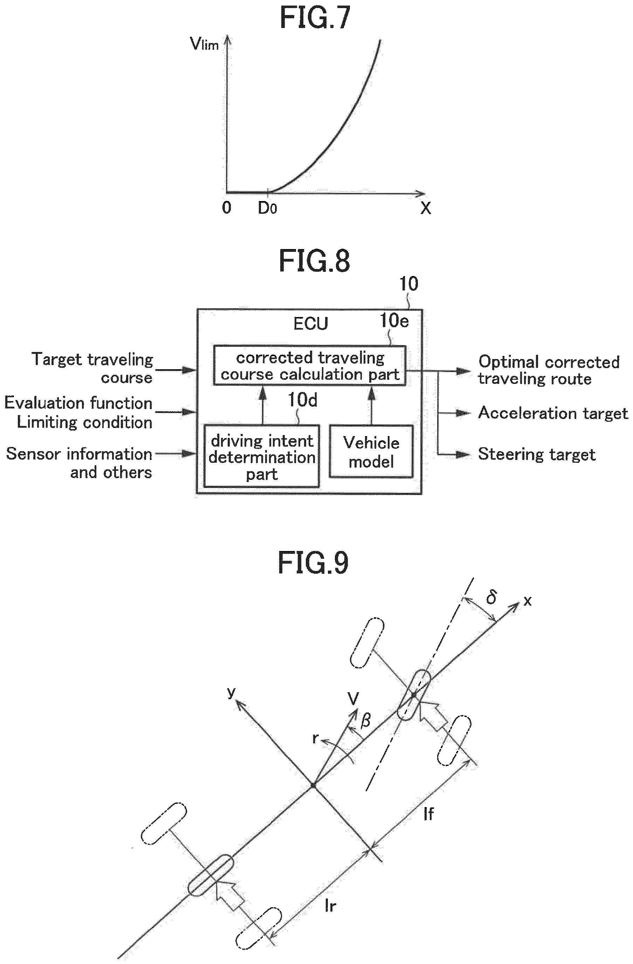

Next, with respect to FIGS. 6 to 9, traveling course correction processing to be executed by the corrected traveling course calculation part 10f of the ECU in the vehicle control device 100 according to this embodiment will be described. FIG. 6 is an explanatory diagram of obstacle avoidance by correction of a target traveling course. FIG. 7 is an explanatory diagram showing a relationship between a permissible upper limit of a pass-by speed and a clearance between an obstacle and an own vehicle during avoidance of the obstacle. FIG. 8 is an explanatory diagram of the traveling course correction processing, and FIG. 9 is an explanatory diagram of a vehicle model.

In FIG. 6, the vehicle 1 is traveling on a traveling road (lane), and is just about passing a second vehicle 3 being traveling or parked and overtaking the vehicle 3.

Generally, when passing (or overtaking) an obstacle (e.g., a preceding vehicle, a parked vehicle, or a pedestrian) on or near a road, the driver of the vehicle 1 keeps a given clearance or distance (lateral distance) between the vehicle 1 and the obstacle in a lateral direction orthogonal to a traveling direction of the vehicle 1, and reduces the vehicle speed to a value at which the driver feels safe. Specifically, in order to avoid dangers such as a situation where a preceding vehicle suddenly changes a course, a situation where a pedestrian comes out from a blind spot due to the obstacle, and a situation where a door of a parked vehicle is suddenly opened, the relative speed with respect to the obstacle is set to a lower value as the clearance becomes smaller.

Further, generally, when the vehicle 1 is approaching a preceding vehicle from behind the preceding vehicle, the driver of the vehicle 1 adjusts the vehicle speed (relative speed) according to an inter-vehicle distance (longitudinal distance) along the travelling direction. Specifically, when the inter-vehicle distance is relatively large, an approaching speed (relative speed) is maintained relatively high. However, when the inter-vehicle distance becomes relatively small, the approaching speed is set to a lower value. Subsequently, at a given inter-vehicle distance, the relative speed between the two vehicles is set to zero. This action is the same even when the preceding vehicle is a parked vehicle.

As above, the driver drives the vehicle 1 in such a manner as to avoid dangers while taking into account a relationship between the distance (including the lateral distance and the longitudinal distance) between an obstacle and the vehicle 1, and the relative speed therebetween.

Therefore, in this embodiment, as shown in FIG. 6, the vehicle 1 is configured to set a two-dimensional distribution zone (speed distribution zone 40) defining a permissible upper limit of the relative speed in the travelling direction of the vehicle 1 with respect to an obstacle (such as the parked vehicle 3) detected by the vehicle 1, around the obstacle (over lateral, rear and forward regions around the obstacle) or at least between the obstacle and the vehicle 1. In the speed distribution zone 40, the permissible upper limit $V_{lim}$ of the relative speed is set at each point around the obstacle. In this embodiment, in all the driving support modes, traveling course correction processing is executed to prevent the relative speed of the vehicle 1 with respect to the obstacle from exceeding the permissible upper limit $V_{lim}$ in the speed distribution zone 40.

As can be understood from FIG. 6, in the speed distribution zone 40, the permissible upper limit of the relative speed is set such that it becomes smaller as the lateral distance and the longitudinal distance from the obstacle become smaller (as the vehicle 1 approaches the obstacle more closely). In FIG. 6, for the sake of facilitating understanding, four constant relative speed lines each connecting the same permissible upper limits are shown. In this embodiment, the constant relative speed lines a, b, c, d correspond, respectively, to four lines on which the permissible upper limit $V_{lim}$ is 0 km/h, 20 km/h, 40 km/h and 60 km/h. In this embodiment, each of four constant relative speed regions is set to have an approximately rectangular shape. The corrected traveling course calculation part 10f is configured to, when an obstacle (surrounding object) to be avoided is detected by the surrounding object detection part 10b, set an upper limit line of a permissible relative speed at which the own vehicle is permitted to travel with respect to the obstacle, in the above manner, and then correct the target traveling course calculated by the target traveling course calculation part 10c, in such a manner as to satisfy the upper limit line.

Here, the speed distribution zone 40 does not necessarily have to be set over the entire circumference of the obstacle, but may be set at least in a region behind the obstacle and on one (in FIG. 6, right side) of opposite lateral sides of the obstacle on which the vehicle 1 exists.

As shown in FIG. 7, in a situation where the vehicle 1 is traveling at a certain absolute speed, the permissible upper limit $V_{lim}$ set in the lateral direction of the obstacle is kept at 0 (zero) km/h when the clearance X is less than $D_0$ (safe distance), and then quadratically increases when the clearance X becomes equal to or greater than $D_0$ ($V_{lim} = k$ $(X - D_0)^2$, where $X \geq D_0$). That is, when the clearance X is less than $D_0$, the relative speed of the vehicle 1 becomes zero so as to ensure safety. On the other hand, when the clearance X is equal to or greater than $D_0$, the vehicle 1 is permitted to pass the obstacle at a larger relative speed as the clearance becomes larger.

In the example illustrated in FIG. 7, the permissible upper limit $V_{lim}$ in the lateral direction of the obstacle is defined as follows: $V_{lim} = f(X) = k (X - D_0)^2$. In this formula, k denotes a gain coefficient related to the degree of change of $V_{lim}$ with respect to X, and is set depending on a type of obstacle or the like. Similarly, $D_0$ is set depending on a type of obstacle or the like.

In this embodiment, $V_{lim}$ is defined as a quadratic function of X, as mentioned above. Alternatively, $V_{lim}$ may be defined as another function (e.g., a linear function). Further, the permissible upper limit $V_{lim}$ has been described based on an example in which it is set in a region laterally outward of the obstacle, with reference to FIG. 7, it can be set in the remaining region in all radial directions of the obstacle including the longitudinal direction, in the same manner. In such a case, the coefficient k and the safe distance $D_0$ may be set depending on a direction from the obstacle.

The speed distribution zone 40 can be set based on various parameters. Examples of the parameter may include the relative speed between the vehicle 1 and an obstacle, the type of obstacle, the traveling direction of the vehicle 1, a moving direction and a moving speed of the obstacle, the length of the obstacle, and the absolute speed of the vehicle 1. That is, based on these parameters, the coefficient k and the safe distance $D_0$ can be selected.

In this embodiment, the obstacle includes a vehicle, a pedestrian, a bicycle, a cliff, a trench, a hole and a fallen object. The vehicle can be classified into a passenger vehicle, a truck, and a motorcycle. The pedestrian can be classified into an adult, a child and a group.

As shown in FIG. 6, when the vehicle 1 is traveling on the traveling road 7, the surrounding object detection part 10b comprised in the ECU 10 of the vehicle 1 operates to detect an obstacle (parked vehicle 3) based on the image data from the vehicle-mounted camera 21. At this moment, the type of obstacle (in this example, a vehicle or a pedestrian) is identified.

Further, the surrounding object detection part 10b operates to calculate the position and the relative speed of the obstacle (parked vehicle 3) with respect to the vehicle 1, and absolute speed of the obstacle, based on the measurement data from the millimeter-wave radar 22 and vehicle speed data from the vehicle speed sensor 23. Here, the position of the obstacle includes an x-directional position (longitudinal distance) along the traveling direction of the vehicle 1, and a y-directional position (lateral distance) along the lateral direction orthogonal to the traveling direction.

The corrected traveling course calculation part 10f comprised in the ECU 10 operates to set the speed distribution zone 40 with respect to each of one or more detected obstacles (in FIG. 6, the parked vehicle 3). Then, the corrected traveling course calculation part 10f operates to correct a traveling course to prevent the vehicle speed (relative speed) of the vehicle 1 from exceeding the permissible upper limit $V_{lim}$ in the speed distribution zone 40. That is, along with avoidance of the obstacle, the corrected traveling course calculation part 10f operates to correct the target traveling course determined according to the driving support mode selected by the driver.

Specifically, in a situation where, if the vehicle 1 travels along the target traveling course, the target speed exceeds, at a certain target position, the permissible upper limit defined in the speed distribution zone 40, the target speed is reduced without changing the target position (course Rc1 in FIG. 6), or the target position is changed to a point on a bypass course so as to allow the target speed to avoid exceeding the permissible upper limit (course Rc3 in FIG. 6) or both the target position and the target speed are changed (course Rc2 in FIG. 6).

For example, FIG. 6 shows a case where the calculated target traveling course R is a course which is set such that the vehicle 1 travels along a widthwise middle position of the traveling road 7 (target position) at 60 km/h (target speed). In this case, the parked vehicle 3 as the obstacle exists ahead of the vehicle 1. However, in the stage of calculating the target traveling course R, this obstacle is not taken into account to reduce the calculation load, as mentioned above.

If the vehicle 1 travels along the target traveling course R, it will cut across the constant relative speed lines d, c, c, d in the speed distribution zone 40, in this order. That is, the vehicle 1 being traveling at 60 km/h enters a region inside the constant relative speed line d (permissible upper limit $V_{lim}$ = 60 km/h). Thus, the corrected traveling course calculation part 10f operates to correct the target traveling course R so as to restrict the target speed at each target position of the target traveling course R to the permissible upper limit $V_{lim}$ or less, thereby forming the post-correction target traveling course (corrected traveling course candidate) Rc1. Specifically, in the post-correction target traveling course Rc1, as the vehicle 1 approaches the parked vehicle 3, the target speed is reduced to become equal to or less than the permissible upper limit $V_{lim}$ at each target position, i.e., gradually reduced to less than 40 km/h, and then, as the vehicle 1 travels away from the parked vehicle 3, the target speed is gradually increased to 60 km/h as the original vehicle speed.

The post-correction target traveling course (corrected traveling course candidate) Rc3 is a course which is set such that the vehicle 1 travels outside the constant relative speed line d (which corresponds to a relative speed of 60 km/h), instead of changing the target speed (60 km/h) of the target traveling course R. In this case, the corrected traveling course calculation part 10f operates to correct the target traveling course R such that the target position is changed to a point on or outside the constant relative speed line d, while maintain the target speed of the target traveling course R, thereby forming the post-correction target traveling course Rc3. Thus, the target speed of the post-correction target traveling course Rc3 is maintained at 60 km/h as the target speed of the target traveling course R.

The post-correction target traveling course (corrected traveling course candidate) Rc2 is a course set by changing both the target position and the target speed of the target traveling course R. In the post-correction target traveling course Rc2, instead of maintaining the target speed at 60 km/h, the target speed is gradually reduced as the vehicle 1 approaches the parked vehicle 3, and then gradually increased to 60 km/h as the original vehicle speed, as the vehicle 1 travels away from the parked vehicle 3.

The correction to be achieved by changing only the target speed without changing the target position of the target traveling course R, as in the post-correction target traveling course Rc1, can be applied to a driving support mode which involves the automatic speed control but does not involve the automatic steering control (e.g., the automatic speed control mode, the speed limiting mode, and the basic control mode).

Further, the correction to be achieved by changing only the target position without changing the target speed of the target traveling course R, as in the post-correction target traveling course Rc3, can be applied to a driving support mode which involves the automatic steering control (e.g., the preceding vehicle following mode).

Further, the correction to be achieved by changing both the target position and the target speed of the target traveling course R, as in the post-correction target traveling course Rc2, can be applied to a driving support mode which involves the automatic speed control and the automatic steering control (e.g., the preceding vehicle following mode).

Subsequently, as shown in FIG. 8, the corrected traveling course calculation part 10f comprised in the ECU 10 operates to determine an optimal corrected traveling course from among the corrected traveling course candidates settable as a corrected traveling course, based on sensor information and others. Specifically, the corrected traveling course calculation part 10f operates to determine an optimal corrected traveling course from among the corrected traveling course candidates, based on the given evaluation function and the given limiting condition.

The ECU10 stores the evaluation function J, the limiting condition and a vehicle model in the memory. For determining an optimal corrected traveling course, the corrected traveling course calculation part 10f is operable to derive, as the optimal corrected traveling course, one of the corrected traveling course candidates, which is the smallest in terms of the evaluation function, while satisfying the limiting condition and the vehicle model (optimization processing).

The evaluation function J has a plurality of evaluation factors. In this embodiment, the evaluation function is a function for evaluation a difference between the target traveling course and each of a plurality of corrected traveling course candidates, in terms of, e.g., speed (longitudinal and lateral speeds), acceleration (longitudinal and lateral accelerations), acceleration change rate (longitudinal and lateral acceleration change rates), yaw rate, lateral offset with respect to the widthwise middle of a lane, vehicle angle, steering angle, and other software limitations.

The evaluation factors include an evaluation factor regarding a longitudinal behavior of the vehicle 1 (longitudinal evaluation factor: longitudinal speed, longitudinal acceleration, longitudinal acceleration rate, etc.), and an evaluation factor regarding a lateral behavior of the vehicle 1 (lateral evaluation factor: lateral speed, lateral acceleration, lateral acceleration rate, yaw rate, lateral offset with respect to the widthwise middle of a lane, vehicle angle, steering angle, etc.).

Specifically, the evaluation function J is expressed as the following formula:

$$ J = \sum_{0}^{N} \left\{ W_1 \left( X_1 - X_{ref1} \right)^2 + W_2 \left( X_2 - X_{ref2} \right)^2 + \cdots + W_n \left( X_n - X_{refn} \right)^2 \right\} $$

In this formula, $W_k \left( X_k - X_{refk} \right)^2$ denotes each of the evaluation factors, wherein: $X_k$ denotes a physical value of the corrected traveling course candidate in regard to each of the evaluation factors; $X_{refk}$ denotes a physical value of the target traveling course (before correction) in regard to a corresponding one of the evaluation factors; and $W_k$ denotes a weighting factor for the corresponding one of the evaluation factors (e.g., $0 \leq W_k \leq 1$) (where k is an integer of 1 to n). Thus, in this embodiment, the evaluation function J is equivalent to a value obtained by: calculating differences in respective physical amounts of n evaluation factors between a corrected traveling course candidate and a target traveling course (before correction); weighting respective square values of the differences; and summing the weighted values over a traveling course distance corresponding to a given time period N (e.g., N = 3 sec)

The limiting condition is a condition to be satisfied by each of the corrected traveling course candidates. Thus, the corrected traveling course candidates to be evaluated can be narrowed down by the limiting condition, so that it is possible to reduce a calculation load necessary for the optimization processing based on the evaluation function J, thereby shortening a calculation time period. The limiting condition to be applied is changed according to the currently set driving support mode, and the driver's driving intent determined by the driving intent determination part 10d, as described later.

The vehicle model is designed to define physical movements of the vehicle 1, and expressed as the following motion equations. In this embodiment, this vehicle model is a two-wheel vehicle model as shown in FIG. 9. The physical motions of the vehicle 1 can be defined by the vehicle model, so that it is possible to derive a corrected traveling course which is less likely to give a driver a feeling of strangeness during traveling, and early converge the optimization processing based on the evaluation function J.

$$ mV \left( \frac{d\beta}{dt} + r \right) = -2K_f \left( \beta + \frac{l_f}{V} r - \delta \right) - 2K_r \left( \beta - \frac{l_r}{V} r \right) \qquad (1) $$

$$ I \frac{dr}{dt} = -2K_f \left( \beta + \frac{l_f}{V} r - \delta \right) l_f + 2K_r \left( \beta - \frac{l_r}{V} r \right) l_r \qquad (2) $$

In FIG. 9 and the equations (1) and (2), m denotes a mass of the vehicle 1; I denotes a yawing inertia moment of the vehicle 1; 1 denotes a wheelbase of the vehicle 1; $I_f$ denotes a distance between a center-of-gravity and a front axle of the vehicle 1; $I_r$ denotes a distance between the center-of-gravity and a rear axle of the vehicle 1; $K_f$ denotes a cornering power per front road wheel of the vehicle 1; $K_r$ denotes a cornering power per rear road wheel of the vehicle 1; V denotes a vehicle speed of the vehicle 1; $\delta$ denotes an actual steering angle of a front road wheel of the vehicle 1 ; $\beta$ denotes a lateral slip angle at the center-of-gravity; r denotes a yaw angular speed of the vehicle 1; $\theta$ denotes a yaw angle of the vehicle 1; y denotes a lateral displacement with respect to an absolute space; and t denotes time.

In this way, the corrected traveling course calculation part 10f is operable, based on the target traveling course, the limiting condition, the vehicle model, etc., to derive an optimal corrected traveling course which is the smallest in terms of the evaluation function J, from among the plurality of corrected traveling course candidates.

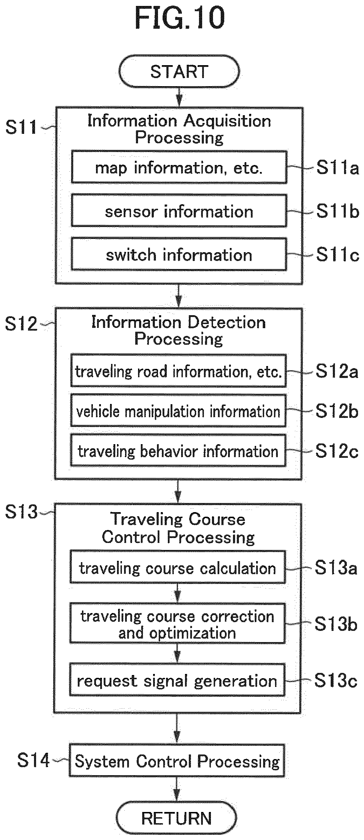

Next, with reference to FIGS. 10 to 18, a processing flow of driving support control in the vehicle control device 100 according to this embodiment will be described. FIG. 10 is a processing flow of the driving support control.

The ECU 10 operates to repeatedly execute the processing flow in FIG. 10 at intervals of a given time period (e.g., 0.1 seconds). First of all, the ECU 10 (input processing part 10a) operates to execute information acquisition processing (S11). In the information acquisition processing, the ECU 10 operates to: acquire the current vehicle position information and the map information, from the position measurement system 29 and the navigation system 30 (S11a); acquire sensor information from the vehicle-mounted camera 21, the millimeter-wave radar 22, the vehicle speed sensor 23, the acceleration sensor 24, the yaw rate sensor 25, the driver manipulation unit 35 and others (S11b); and acquire switch information from the steering angle sensor 26, the accelerator sensor 27, the brake sensor 28, and others (S11c).

Subsequently, the ECU 10 (input processing part 10a) operates to execute given information detection processing (S12), using a variety of information acquired in the information acquisition processing (S11). In the information detection processing, the ECU 10 operates to detect, from the current vehicle position information, the map information and the sensor information, traveling road information regarding a shape of a traveling road around and ahead of the vehicle 1 (the presence or absence of a straight section and a curve section, the length of each of the sections, the curvature radius of the curve section, a lane width, the positions of opposed lane edges, the number of lanes, the presence or absence of an intersection, a speed limit determined by the curvature of a curve, etc.), and the preceding vehicle trajectory information (the position and the vehicle speed of a preceding vehicle) (S12a).

Further, the ECU 10 operates to: detect, from the switch information, vehicle manipulation information regarding vehicle manipulation by the driver (steering angle, accelerator pedal depression amount, brake pedal depression amount, etc.) (S12b); and detect, from the switch information and the sensor information, traveling behavior information regarding the behavior of the vehicle 1 (vehicle speed, longitudinal acceleration, lateral acceleration, yaw rate, etc.) (S12c).

Subsequently, the ECU 10 operates to execute traveling course control processing, based on information obtained by calculation (S13). The traveling course control processing comprises traveling course calculation processing (S13a), traveling course correction and optimization processing (S13b), and request signal generation processing (S13c).

In the traveling course calculation processing (S13a), the first traveling course, the second traveling course or the third traveling course is calculated as a target traveling course, as mentioned above.

In the traveling course correction and optimization processing (SI3b), the ECU 10 operates to, based on a surrounding obstacle or the like (e.g., the parked vehicle 3 illustrated in FIG. 6), correct the target traveling course to calculate a plurality of corrected traveling course candidates, and, based on the given evaluation function and the given limiting condition, determine an optimal corrected traveling course from among the calculated corrected traveling course candidates.

In the request signal generation processing (SI3c), the ECU 10 operates to generate a request signal to be output to a concerned control system (the engine control system 31, the brake control system 32 and/or the steering control system 33) so as to allow the vehicle 1 to travel on the finally derived traveling course, according to the selected driving support mode. Specifically, the ECU 10 operates to generate a request signal (an engine request signal, a braking request signal and/or a steering request signal) according to target control amounts of the engine, the braking device and the steering device, determined by the derived corrected traveling course (optimal traveling course).

Further, the ECU 10 operates to output the generated request signal to (the engine control system 31, the brake control system 32 and/or the steering control system 33) (system control processing: S14).

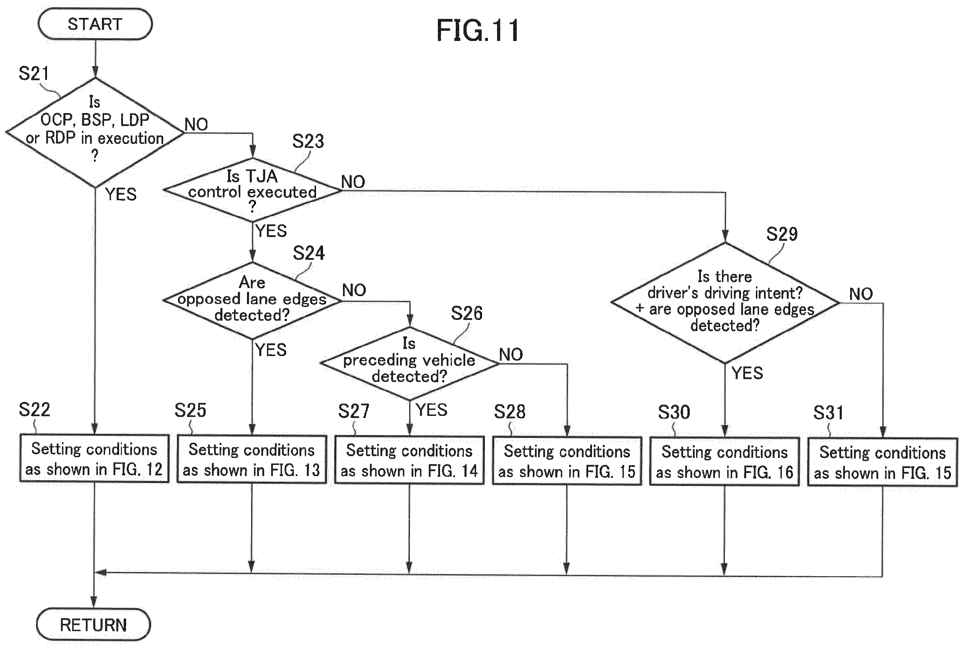

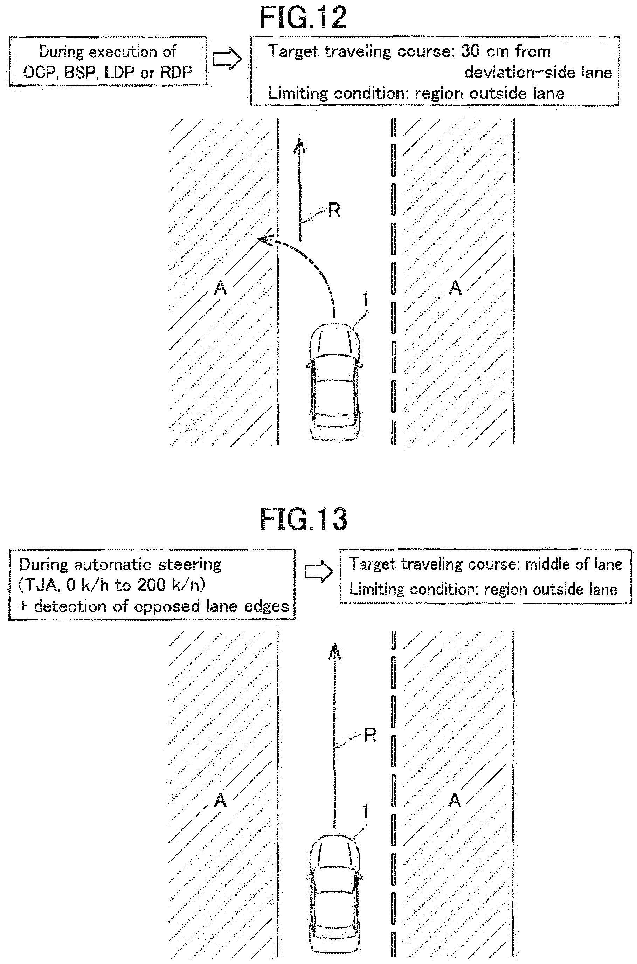

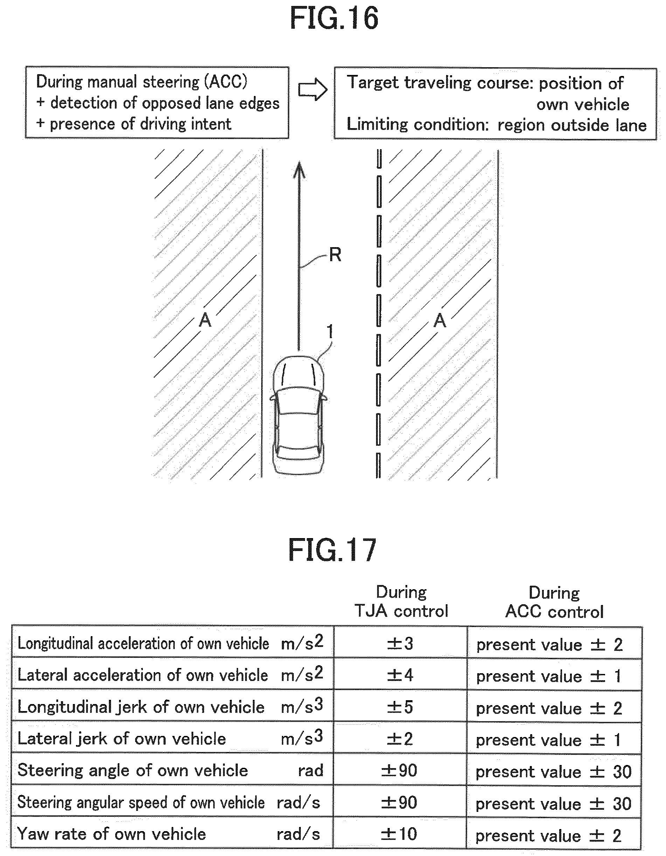

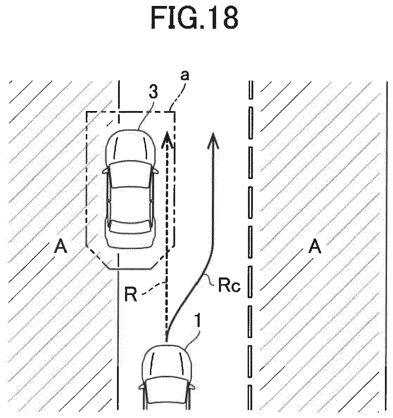

Next, with reference to FIGS. 11 to 18, a detailed processing flow of the traveling course correction and optimization processing (S13b) in FIG. 10 will be described. FIG. 11 is a flowchart for setting the limiting condition and the like to be used by the corrected traveling course calculation part 10f. FIGS. 12 to 16 are diagrams showing examples of a limiting condition on traveling course to be satisfied by corrected traveling course candidates. FIG. 17 is a table showing a limiting condition on traveling parameter to be satisfied by corrected traveling course candidates. FIG. 18 is a diagram showing one example of an optimal corrected traveling course satisfying the limiting condition, derived by the corrected traveling course calculation part 10f of the vehicle control device according to this embodiment.

As described below, the target traveling course calculated by the target traveling course calculation part 10c is corrected by the corrected traveling course calculation part 10f, in such a manner as to satisfy various limiting conditions, thereby generating corrected traveling course candidates. Here, when it fails to derive a corrected traveling course capable of simultaneously satisfying all limiting conditions applied, a part of the limiting conditions regarding safe traveling is applied on a priority basis to generate corrected traveling course candidates.

First of all, in step S21 in FIG. 11, the automatic steering control part 10e operates to determine whether or not any one of the steering-based avoidance control with respect to an oncoming vehicle (OCP), the steering-based avoidance control with respect to an object approaching from behind (BSP), and the steering-based avoidance control with respect to deviation from the lane or road (LDP/RDP) is in execution. When any one of the steering avoidance controls is determined to be in execution, it is determined that there is a possibility of deviation from a lane in which the vehicle 1 is traveling, and the processing routine proceeds to step S22. In the step S22, as shown in FIG. 12, the target traveling course calculation part 10c operates to set a target traveling course R at a position apart inwardly, by 30 cm, from a deviation-side demarcation line of the lane. Further, a region A outside the lane (shaded region in FIG. 12) is set as the limiting condition to be used by the corrected traveling course calculation part 10f.

In the example illustrated in FIG. 12, according to the steering-based avoidance control with respect to an oncoming vehicle (OCP), the vehicle 1 is automatically steered leftwardly. Therefore, the target traveling course R is set at a position apart inwardly, by 30 cm, from a left demarcation line of the lane. That is, the target traveling course R is set at a position offset, with respect to the middle between demarcation lines defining opposed lane edges, on the side on which there is the possibility of the deviation. On the other hand, when it is determined by the automatic steering control part 10e that there is no possibility of deviation from the lane in a situation where a lane is detected (i.e., opposed lane edges are detected), the target traveling course R is set along the widthwise middle of the lane, as described later with reference to FIG. 13.

As mentioned above, the limiting condition is set to be the region A outside demarcation lines on both sides of the vehicle 1 as shown in FIG. 12. By setting the limiting condition in this manner, the corrected traveling course calculation part 10f is operable to correct the target traveling course R without causing the vehicle 1 to enter the region A. Similarly, when it is determined by the automatic steering control part 10e that there is no possibility of deviation from the lane, the corrected traveling course calculation part 10f also operates to set, as the limiting condition, the region A outside the demarcation lines on both sides of the vehicle 1 (e.g., the example in FIG. 13).

On the other hand, when none of the steering avoidance controls is determined, in the step S21, to be in execution, the processing routine proceeds to step S23. In the step S23, it is determined whether or not the driving support mode is set to the preceding vehicle following mode (TJA). When the driving support mode is determined to be set to the preceding vehicle following mode, the processing routine proceeds to step S24. On the other hand, when the driving support mode is determined not to be set to the preceding vehicle following mode, the processing routine proceeds to step S29. In the step S24, it is determined whether or not a lane is detected by analyzing image data from the vehicle-mounted camera 21 through the input processing part 10a (image analysis part). In the vehicle control device according to this embodiment, the limiting condition is changed depending on the steering mode set by the driver manipulation unit 35 as the mode setting manipulation unit (whether or not the steering mode is the preceding vehicle following mode), and further changed depending on whether or not a lane is detected, as described later.

When a lane is determined, in the step S24, to be detected, the processing routine proceeds to step S25. In the step S25, the target traveling course and the limiting condition are set as shown in FIG. 13. Specifically, when the preceding vehicle following mode as an automatic steering mode is in execution, and a lane is detected, the target traveling course calculation part 10c operates to set the target traveling course R at the middle between the demarcation lines defining the opposed lane edges, and the corrected traveling course calculation part 10f operates to set, as the limiting condition, a region outside the detected lane (a region A outside demarcation lines defining the opposed lane edges (shaded region in FIG. 13). That is, as long as a lane is e detected, even during execution of the preceding vehicle following mode, the target traveling course R is set at the widthwise middle of the lane, and the limiting condition is set to be the region A outside the lane. By setting the limiting condition in this manner, the corrected traveling course calculation part 10f is operable to correct the target traveling course R without causing the vehicle 1 to enter the region A.

On the other hand, when no lane is determined, in the step S24, to be detected, the processing routine proceeds to step S26. In the step S26, it is determined, based on image data from the vehicle-mounted camera 21 and measurement data from the millimeter-wave radar 22, whether or not a preceding vehicle is detected. When a preceding vehicle is determined, in the step S26, to be detected, the processing routine proceeds to step S27. On the other hand, when no preceding vehicle is determined, in the step S26, to be detected, the processing routine proceeds to step S28.

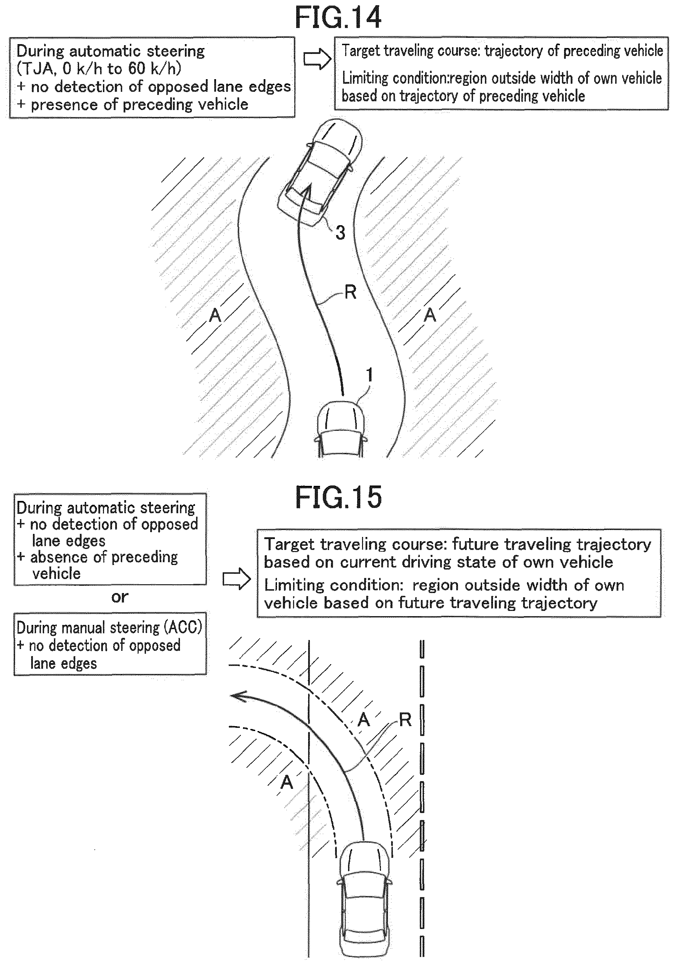

In the step S27, the target traveling course R and the limiting condition are set as shown in FIG. 14. Specifically, when, in the preceding vehicle following mode, no lane is detected, but a preceding vehicle is detected, a traveling trajectory of the preceding vehicle 3 is set as the target traveling course R. Further, a region A outside the width of the own vehicle 1 whose middle is coincident with an estimated traveling course set on the assumption that the own vehicle 1 travels along the target traveling course R (the traveling trajectory of the preceding vehicle 3) is set as the limiting condition. Thus, the out side of a region through which the own vehicle 1 passes when the own vehicle 1 travels along the same course as the traveling trajectory of the preceding vehicle 3 is set as the limiting condition. By setting the limiting condition in this manner, the corrected traveling course calculation part 10f is operable to correct the target traveling course R without causing the vehicle 1 to enter the region A.

When no preceding vehicle is determined, in the step S26, to be detected, and thereby the processing routine proceeds to the step S28, the target traveling course and the limiting condition are set in the step S28, as shown in FIG. 15. Specifically, when, in the preceding vehicle following mode, neither a lane nor a preceding vehicle is detected, an estimated traveling course along which the vehicle 1 is estimated to travel when a current driving state based on the intent of the driver is continued is set as the target traveling course R, and a region A outside the width of the vehicle 1 whose middle is coincident with the estimated traveling course is set as the limiting condition. That is, when no preceding vehicle is detected, the target traveling course calculation part 10c operates to set the limiting condition on the basis of the target traveling course R calculated by the target traveling course calculation part 10c. By setting the limiting condition in this manner, the corrected traveling course calculation part 10f is operable to correct the target traveling course R without causing the vehicle 1 to enter the region A.

When the driving support mode is determined, in the step S23, not to be set to the preceding vehicle following mode, and thereby the processing routine proceeds to the step S29, the driving intent determination part 10d operates, in the step S28, to determine whether or not the driver has the intent to drive the vehicle 1, and a lane is detected by the vehicle-mounted camera 21. Specifically, the driving intent determination part 10d operates to analyze image data of the driver captured by the vehicle interior camera comprised in the vehicle-mounted camera 21 to determine whether or not the driver is sleeping or inattentive. When the driver is determined not to be sleeping or inattentive, the driving intent determination part 10d operates to determine that the driver has the intent to drive the vehicle 1. When it is determined that the driver has the intent to drive the vehicle 1 and a lane is detected, the processing routine proceeds to step S30, and otherwise the processing routine proceeds to step S31. In the vehicle control device according to this embodiment, the limiting condition is changed based on the presence or absence of the driving intent determined by the driving intent determination part 10d, and further changed depending on whether or not a lane is detected, as described later.

In the step S30, the target traveling course R and the limiting condition are set as shown in FIG. 16. Specifically, when, in any control mode other than the preceding vehicle following mode, the driver has the driving intent, and a lane is detected, an estimated traveling course along which the vehicle 1 is estimated to travel when a current driving state based on the intent of the driver is continued is set as the target traveling course R. In the example illustrated in FIG. 16, the vehicle 1 travels based on the intent of the driver, in a lane at a position close to a left demarcation line with respect to a widthwise middle of the lane, and it is assumed that, if this driving state is continued, the vehicle 1 keeps traveling at the position close to the left demarcation line. Therefore, the position close to the left demarcation line with respect to the widthwise middle of the lane, i.e., an estimated traveling course, is set as the target traveling course R. Further, a region A, i.e., a region outside the width of the vehicle 1 whose middle is coincident with this estimated traveling course, or a region outside demarcation lines defining the opposed lane edges, is set as the limiting condition. By setting the limiting condition in this manner, the corrected traveling course calculation part 10f is operable to correct the target traveling course R without causing the vehicle 1 to enter the region A.

When it is determined that the driver does not have the driving intent, or no lane is detected, and thereby the processing routine proceeds to the step S31, the target traveling course and the limiting condition are set in the step S31, as shown in FIG. 15. Specifically, in FIG. 15, an estimated traveling course along which the vehicle 1 is estimated to travel when a current driving state based on the intent of the driver is continued is set as the target traveling course R, and a region A outside the width of the vehicle 1 whose middle is coincident with the estimated traveling course is set as the limiting condition, as mentioned above.

Next, with reference to FIG. 17, the limiting condition on traveling parameter to be satisfied by corrected traveling course candidates will be described.

As mentioned above, the target traveling course calculation part 10c of the ECU 10 operates to calculate the target traveling course R, and the corrected traveling course calculation part 10f operates to correct the target traveling course R in such a manner as to satisfy each of the limiting conditions (FIGS. 12 to 16), as mentioned above. Further, the corrected traveling course calculation part 10f operates to correct the target traveling course R in such a manner as to satisfy traveling parameters as shown in FIG. 17. Specifically, although a corrected traveling course candidate satisfies each of the limiting conditions illustrated in FIGS. 12 to 18, the corrected traveling cannot be adopted, if it is impractical in terms of motion performance of the vehicle 1, or it gives a passenger of the vehicle 1 a feeling of discomfort. Therefore, in this embodiment, the limiting condition is also set on traveling parameters regarding vehicle acceleration and the like.

Specifically, in this embodiment, as shown in FIG. 17, in the preceding vehicle following mode (TJA), the longitudinal acceleration of the own vehicle is restricted within $\pm$ 3 m/s$^2$; the lateral acceleration of the own vehicle is restricted within $\pm$ 4 m/s$^2$; the longitudinal jerk of own vehicle is restricted within $\pm$ 5 m/s$^3$; the lateral jerk of own vehicle is restricted within $\pm$ 2 m/s$^3$; the steering angle of the own vehicle is restricted within $\pm$ 90 rad; the steering angular speed of the own vehicle is restricted within $\pm$ 90 rad/s; and the yaw rate of the own vehicle is restricted within $\pm$ 10 rad/s. As above, in the preceding vehicle following mode as an automatic steering mode, the limiting condition is given as the absolute values of traveling parameters. Thus, by providing the limiting condition on traveling parameter in this manner, it is possible to prevent a situation where a large G (acceleration) is applied to a passenger of the vehicle 1 to give the passenger a feeling of discomfort.

On the other hand, in the automatic speed control mode (ACC), a present value of the longitudinal acceleration of the own vehicle is restricted within $\pm$ 2 m/s$^2$; a present value of the lateral acceleration of the own vehicle is restricted within $\pm$ 1 m/s$^2$; a present value of the longitudinal jerk of own vehicle is restricted within $\pm$ 2 m/s$^3$; a present value of the lateral jerk of own vehicle is restricted within $\pm$ 1 m/s$^3$; a present value of the steering angle of the own vehicle is restricted within $\pm$ 30 rad; a present value of the steering angular speed of the own vehicle is restricted within $\pm$ 30 rad/s; and a present value of the yaw rate of the own vehicle is restricted within $\pm$ 2 rad/s. As above, in the automatic speed control mode as a manual steering mode, the limiting condition is given as a variation width with respect to the present value of each traveling parameter. Thus, by providing the limiting condition on traveling parameter in this manner, it is possible to prevent an abrupt acceleration/deceleration or the like.

Next, with reference to FIG. 18, one example of an optimal corrected traveling course derived by the corrected traveling course calculation part 10f will be described.

In the example illustrated in FIG. 18, in the own vehicle 1, the preceding vehicle following mode (TJA) is set, but the steering-based avoidance control with respect to an oncoming vehicle (OCP) and the like are not executed. Further, a lane is detected by the vehicle-mounted camera 21. Thus, in the flowchart in FIG. 11, the processing routine advances as follows: steps S21 → S23 → S24 → S25, and, in the step S25, the target traveling course R is set at the widthwise middle of the detected lane.

However, a vehicle 3 is parked ahead of the own vehicle 1. Thus, the surrounding object detection part 10b operates to detect the vehicle 3 as a surrounding object to be avoided, and the corrected traveling course calculation part 10f operates to set, around the vehicle 3, an upper limit line of a permissible relative speed at which the own vehicle 1 is permitted to travel with respect to the vehicle 3 (in the example illustrated in FIG. 18, a line a on which the permissible relative speed is 0 (zero)). Thus, in the example illustrated in FIG. 18, if the own vehicle 1 keeps traveling along the target traveling course R, the own vehicle 1 undesirable enters the inside of the line a on which the permissible relative speed with respect to the vehicle 3 is 0 (zero).

Therefore, the corrected traveling course calculation part 10f operates to correct the previously set target traveling course R to prevent the own vehicle 1 from entering the inside of the line a. In this process, (1) a condition that the own vehicle 1 does not enter a region A (shaded region in FIG. 18) outside demarcation lines defining the opposed lane edges, and (2) a condition that each traveling parameter does not exceed the range of the set value during the TJA control in FIG. 17 are set, as the limiting condition, on corrected traveling course candidates. Then, the corrected traveling course calculation part 10f operates to, from among a plurality of corrected traveling course candidates satisfying the limiting condition, derive, as a corrected traveling course Rc, one of the corrected traveling course candidates, which is the smallest in terms of the aforementioned evaluation function J. In this process, the number of corrected traveling course candidates for each of which a value of evaluation function J has to be calculated can be reduced by the limiting condition, so that it is possible to derive the optimal corrected traveling course Rc in a relatively small amount of calculation.

In the vehicle control device 100 according to this embodiment, when a surrounding object to be avoided is detected by the surrounding object detection part 10b, the corrected traveling course calculation part 10f operates to set the upper limit line (lines a to d) of a permissible relative speed at which the vehicle 1 is permitted to travel with respect to the surrounding object. The corrected traveling course calculation part 10f also operates to derive the corrected traveling course Rc, based on the upper limit line, the given evaluation function J, and the given limiting condition. As above, the corrected traveling course calculation part 10f is provided with the given limiting condition, so that it is possible to derive one appropriate corrected traveling course from among a plurality of corrected traveling course candidates settable as a corrected traveling course, in a relatively small amount of calculation. Further, when it is determined by the automatic steering control part 10e that there is the possibility that the own vehicle 1 deviates from a lane (the step S21 → the step S22 in FIG. 11), the target traveling course calculation part 10f operates to set the target traveling course R at a position offset, with respect to a widthwise middle of the lane, on a side on which there is the possibility of the deviation (deviation side) (FIG. 12). Thus, when there is the possibility that the vehicle 1 deviates from the lane, the target traveling course R is set at a position offset on the deviation side, so that, even in a situation where the own vehicle 1 deviates from the lane, it is possible to return the own vehicle 1 to the target traveling course R which is set at a relatively close position on the deviation side, without giving a driver a feeling of strangeness.

In the vehicle control device 100 according to this embodiment, when there is no possibility of deviation from the lane (the step S21 → the step S23 in FIG. 11), the target traveling course R is set at the widthwise middle of the lane (FIG. 13), so that it is possible to give a feeling of safety to a driver of the vehicle being traveling in the lane.

In the vehicle control device 100 according to this embodiment, irrespective of whether or not there is the possibility of deviation from the lane, a region (region A in FIG. 12 or 13) outside the lane in which the own vehicle 1 is traveling is set as the limiting condition. Thus, except in the event of emergency collision avoidance or the like, the corrected traveling course Rc is set in the lane in which the own vehicle 1 is traveling, so that it is possible to avoid unnecessary deviation from the lane.

In the vehicle control device 100 according to this embodiment, when the steering-based avoidance control with respect to an oncoming vehicle (OCP) is executed, it is determined that there is the possibility of deviation from the lane (the step S21 → the step S22 in FIG. 11). Thus, even when the own vehicle 1 deviates from the lane so as to avoid the oncoming vehicle, it is possible to return the own vehicle 1 to the inside of the lane without a feeling of strangeness.

In the vehicle control device 100 according to this embodiment, when the steering-based avoidance control with respect to a rearward or laterally outward side (BSP) is executed, it is determined that there is the possibility of deviation from the lane (the step S21 → the step S22 in FIG. 11). Thus, even when the own vehicle 1 deviates from the lane due to the steering-based avoidance control with respect to the rearward or laterally outward side, it is possible to return the own vehicle 1 to the inside of the lane without a feeling of strangeness.

In the vehicle control device 100 according to this embodiment, when the lane-or road-deviation avoidance control (LDP/RDP) is executed, it is determined that there is the possibility of deviation from the lane (the step S21 → the step S22 in FIG. 11). Thus, even when the own vehicle 1 is returned to the inside of the lane after the execution of the lane-or road-deviation avoidance control, a driver is never given a feeling of strangeness.

Although the present invention has been described based on a preferred embodiment thereof, it is to be understood that various changes and modifications will be apparent to those skilled in the art. Particularly, in the above embodiment, the preceding vehicle following mode (TJA) is set as an automatic steering mode, and the automatic speed control mode (ACC) is set as a manual steering mode. Alternatively, any other suitable control mode may be set as an automatic steering mode or a manual steering mode. Further, in the above embodiment, automatic steering control is not executed in the automatic speed control mode. Alternatively, the vehicle control device of the present invention may be configured to, in a given situation, e.g., in the event of emergency risk avoidance, execute automatic steering control even in the automatic speed control mode.

LIST OF REFERENCE SIGNS

| | |
|---|---|
| 1: | vehicle |
| 10: | vehicle control and computing unit (ECU) |
| 10a: | input processing part (image analysis part) |
| 10b: | surrounding object detection part |
| 10c: | target traveling course calculation part |
| 10d: | driving intent determination part |
| 10e: | automatic steering control part |
| 10f: | corrected traveling course calculation part |
| 21: | vehicle-mounted camera |
| 22: | millimeter-wave radar |
| 23: | vehicle speed sensor |
| 24: | acceleration sensor |
| 25: | yaw rate sensor |
| 26: | steering angle sensor |
| 27: | accelerator sensor |
| 28: | brake sensor |
| 29: | position measurement system |
| 30: | navigation system |
| 31: | engine control system |
| 32: | brake control system |
| 33: | steering control system |
| 35: | driver manipulation unit (mode setting manipulation unit) |
| 36a: | ISA switch |
| 36b: | TJA switch |
| 36c: | ACC switch |
| 37a: | distance setting switch |
| 37b: | vehicle speed setting switch |
| 40: | speed distribution zone |
| 100: | vehicle control device |

**Claims**

1. A vehicle control device for supporting driving of a vehicle, comprising:

   a surrounding object detection part to detect a surrounding object and a lane in which an own vehicle is traveling;
   a target traveling course calculation part to calculate a target traveling course of the own vehicle;
   a corrected traveling course calculation part to correct the target traveling course calculated by the target traveling course calculation part, to derive a corrected traveling course; and
   an automatic steering control part to, when determining that there is a possibility that the own vehicle deviates from the lane, assist steering of the own vehicle such that the own vehicle travels in the lane,
   wherein:

   the corrected traveling course calculation part is configured to, when a surrounding object to be avoided is detected by the surrounding object detection part, set an upper limit line of a permissible relative speed at which the own vehicle is permitted to travel with respect to the surrounding object, and derive the corrected traveling course, based on the upper limit line, a given evaluation function, and a given limiting condition; and
   the target traveling course calculation part is configured to, when it is determined by the automatic steering control part that there is the possibility that the own vehicle deviates from the lane, set the target traveling course at a position offset, with respect to a widthwise middle of the lane, on a side on which there is the possibility of the deviation.

2. The vehicle control device as recited in claim 1, wherein the target traveling course calculation part is configured to, when it is determined by the automatic steering control part that there is no possibility that the own vehicle deviates from the lane, set the target traveling course at the widthwise middle of the lane.

3. The vehicle control device as recited in claim 1 or 2, wherein the corrected traveling course calculation part is configured to set, as the limiting condition, a region outside the lane in which the own vehicle is traveling, irrespective of whether or not there is the possibility that the own vehicle deviates from the lane.

4. The vehicle control device as recited in any one of claims 1 to 3, wherein the automatic steering control part is configured to, when executing steering-based avoidance control with respect to an oncoming vehicle, determine that there is the possibility that the own vehicle deviates from the lane.

5. The vehicle control device as recited in any one of claims 1 to 3, wherein the automatic steering control part is configured to, when executing steering-based avoidance control with respect to a rearward or laterally outward side, determine that there is the possibility that the own vehicle deviates from the lane.

6. The vehicle control device as recited in any one of claims 1 to 3, wherein the automatic steering control part is configured to, when executing lane-or road-deviation avoidance control, determine that there is the possibility that the own vehicle deviates from the lane.

# FIG.1A

# FIG.1B

# FIG.2

# FIG.3

EP 3 699 051 A1

# FIG.4

EP 3 699 051 A1

# FIG.5

# FIG.6

# FIG.7

# FIG.8

# FIG.9

# FIG.10

```
START
```

**S11** — Information Acquisition Processing
- map information, etc. — S11a
- sensor information — S11b
- switch information — S11c

**S12** — Information Detection Processing
- traveling road information, etc. — S12a
- vehicle manipulation information — S12b
- traveling behavior information — S12c

**S13** — Traveling Course Control Processing
- traveling course calculation — S13a
- traveling course correction and optimization — S13b
- request signal generation — S13c

**S14** — System Control Processing

```
RETURN
```

# FIG.11

START

S21 — Is OCP, BSP, LDP or RDP in execution ? — NO → S23
- YES ↓

S23 — Is TJA control executed ? — NO →········→ S29
- YES ↓

S24 — Are opposed lane edges detected? — NO → S26
- YES ↓

S26 — Is preceding vehicle detected? — NO → S28
- YES ↓

S29 — Is there driver's driving intent? + are opposed lane edges detected? — NO → S31
- YES ↓ S30

S22 — Setting conditions as shown in FIG. 12

S25 — Setting conditions as shown in FIG. 13

S27 — Setting conditions as shown in FIG. 14

S28 — Setting conditions as shown in FIG. 15

S30 — Setting conditions as shown in FIG. 16

S31 — Setting conditions as shown in FIG. 15

RETURN

EP 3 699 051 A1

# FIG.12

| During execution of OCP, BSP, LDP or RDP | ⇨ | Target traveling course: 30 cm from deviation-side lane<br>Limiting condition: region outside lane |

# FIG.13

| During automatic steering (TJA, 0 k/h to 200 k/h) + detection of opposed lane edges | ⇨ | Target traveling course: middle of lane<br>Limiting condition: region outside lane |

# FIG.14

During automatic steering (TJA, 0 k/h to 60 k/h) + no detection of opposed lane edges + presence of preceding vehicle ⇒ Target traveling course: trajectory of preceding vehicle

Limiting condition:region outside width of own vehicle based on trajectory of preceding vehicle

# FIG.15

During automatic steering + no detection of opposed lane edges + absence of preceding vehicle

or

During manual steering (ACC) + no detection of opposed lane edges ⇒ Target traveling course: future traveling trajectory based on current driving state of own vehicle

Limiting condition: region outside width of own vehicle based on future traveling trajectory

# FIG.16

| During manual steering (ACC) + detection of opposed lane edges + presence of driving intent | ⇨ | Target traveling course: position of own vehicle Limiting condition: region outside lane |

# FIG.17

|  |  | During TJA control | During ACC control |
|---|---|---|---|
| Longitudinal acceleration of own vehicle | m/s$^2$ | ±3 | present value ± 2 |
| Lateral acceleration of own vehicle | m/s$^2$ | ±4 | present value ± 1 |
| Longitudinal jerk of own vehicle | m/s$^3$ | ±5 | present value ± 2 |
| Lateral jerk of own vehicle | m/s$^3$ | ±2 | present value ± 1 |
| Steering angle of own vehicle | rad | ±90 | present value ± 30 |
| Steering angular speed of own vehicle | rad/s | ±90 | present value ± 30 |
| Yaw rate of own vehicle | rad/s | ±10 | present value ± 2 |

# FIG.18

## INTERNATIONAL SEARCH REPORT

| | International application No. |
|---|---|
| | PCT/JP2018/038455 |

### A. CLASSIFICATION OF SUBJECT MATTER

Int. Cl. B60W30/12(2006.01)i, B60W30/095(2012.01)i, B60W40/04(2006.01)i, B62D6/00(2006.01)i, G08G1/16(2006.01)i, B62D101/00(2006.01)n, B62D117/00(2006.01)n

According to International Patent Classification (IPC) or to both national classification and IPC

### B. FIELDS SEARCHED

Minimum documentation searched (classification system followed by classification symbols)

Int. Cl. B60W10/00-10/30, B60W30/00-50/16, B62D6/00-6/10, G08G1/00-1/16, G05D1/00-1/12, B62D101/00, B62D117/00

Documentation searched other than minimum documentation to the extent that such documents are included in the fields searched

Published examined utility model applications of Japan       1922-1996
Published unexamined utility model applications of Japan    1971-2018
Registered utility model specifications of Japan            1996-2018
Published registered utility model applications of Japan    1994-2018

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2013-147194 A (TOYOTA MOTOR CORP.) 01 August 2013, paragraphs [0038], [0063]-[0069], fig. 1 (Family: none) | 1-6 |
| Y | JP 2009-274482 A (TOYOTA MOTOR CORP.) 26 November 2009, paragraphs [0010], [0011] (Family: none) | 1-6 |
| Y | WO 2016/194168 A1 (NISSAN MOTOR CO., LTD.) 08 December 2016, paragraphs [0042]-[0045], fig. 2 (Family: none) | 1-6 |

☒ Further documents are listed in the continuation of Box C.　　☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 29.11.2018 | 11.12.2018 |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**EP 3 699 051 A1**

**INTERNATIONAL SEARCH REPORT**

| International application No. |
| --- |
| PCT/JP2018/038455 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | JP 2008-529867 A (ROBERT BOSCH GMBH) 07 August 2008, paragraph [0016] & JP 5166883 B2 & US 2008/0319610 A1, paragraph [0020] & WO 2006/079589 A1 & EP 1843924 A1 & DE 102005003274 A1 | 1-6 |
| Y | WO 2016/024318 A1 (NISSAN MOTOR CO., LTD.) 18 February 2016, paragraphs [0048]-[0063], fig. 2B-2C (Family: none) | 1-6 |
| A | JP 9-11870 A (TOYOTA MOTOR CORP.) 14 January 1997, paragraph [0018], fig. 4 (Family: none) | 1-6 |
| A | US 9229453 B1 (GM GLOBAL TECHNOLOGY OPERATIONS LLC) 05 January 2016, entire text, all drawings & DE 102015114464 A1 & CN 105539586 A | 1-6 |

Form PCT/ISA/210 (continuation of second sheet) (January 2015)

34

**EP 3 699 051 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010155545 A